# EUROPÄISCHE PATENTSCHRIFT

(11) **EP 4 436 772 B1**
(45) Veröffentlichungstag und Bekanntmachung des Hinweises auf die Patenterteilung: **09.12.2026**
(21) Anmeldenummer: 22822344.2
(22) Anmeldetag: 24.11.2022
(51) Int. Cl.: B29D 11/00, B05C 13/02

(54) **GRADUELLES FÄRBEN VON LINSENGLÄSERN**
GRADUAL TINTING OF LENS GLASSES
TEINTAGE PROGRESSIVE DES VERRES DE LENTILLES

(30) Priorität: 25.11.2021 DE 102021213251
(43) Veröffentlichungstag der Anmeldung: 02.10.2024
(73) Patentinhaber: Rodenstock GmbH, 80687 München (DE)
(72) Erfinder: FISCHER, Kurt, 94258 Frauenau (DE); WEBER, Martin, 94469 Deggendorf (DE); WIND, Beate, 94209 Regen (DE); KRONSCHNABL, Matthias, 94209 Regen (DE); BAYER, Christine, 94530 Auerbach (DE)
(74) Vertreter: Schlotter, Alexander Carolus Paul
(86) Internationale Anmeldenummer: PCT/EP2022/083071
(87) Internationale Veröffentlichungsnummer: WO 2023/094497

(56) Entgegenhaltungen:
- JP-A- 2008 009 327
- JP-A- 2010 020 138
- JP-A- 2011 081 173
- JP-A- 2013 205 548

## Beschreibung

Die vorliegende Erfindung betrifft ein Verfahren und eine Färbeanlage zum graduellen Färben von Linsengläsern, vorzugsweise Brillengläsern, eine Glashaltevorrichtung für die Färbeanlage zum Halten eines Linsenglases, eine Einstellhilfe für die Glashaltevorrichtung sowie ein System mit der Glashaltevorrichtung und der Einstellhilfe und/oder wenigstens einer weiteren Glashaltevorrichtung.

Die JP 2010 020138 A betrifft ein Linsenfärbeverfahren, das einen Linsenoberflächenbereich bis zur Hälfte bis zu einer genauen oberen Färbegrenzposition färbt, unabhängig von der Dicke (dem Volumen) der Linse, und eine Linsenfärbevorrichtung und einen Linsenhalter zum Färben. Nach der JP 2010 020138 A ist die Linsenfärbevorrichtung 100 ausgestattet mit: einem Färbebehälter zum Aufbewahren einer Färbeflüssigkeit im Inneren; einem Überlaufbehälter zum Aufbewahren der aus dem Färbebehälter übergelaufenen Färbeflüssigkeit; und einer Flüssigkeitsstandsregulierungseinrichtung zum Übertragen einer im Überlaufbehälter aufbewahrten Färbeflüssigkeit in den Färbebehälter. Der Färbebehälter speichert die Färbeflüssigkeit, so dass zumindest die Flüssigkeit aus dem Färbebehälter überläuft, wenn die Linse bis zur oberen Färbegrenzposition in die Färbeflüssigkeit im Färbebehälter eingetaucht wird. Die Flüssigkeitspegel-Einstelleinrichtung ist mit einem Flüssigkeitszufuhrrohr und einer Pumpe ausgestattet. Eine Zirkulationsleitung ist vorgesehen, um den Färbebehälter und den Überlaufbehälter miteinander zu verbinden und die im Überlaufbehälter gespeicherte Färbeflüssigkeit, die aus dem Färbebehälter übergelaufen ist, als die Linse bis zur oberen Färbegrenzposition in die Färbeflüssigkeit eingetaucht wurde, vom Überlaufbehälter zum Färbebehälter zu leiten.

Die JP 2008 009327 A betrifft ein Färbeverfahren, bei dem eine symmetrische Längsfärbung auch dann durchgeführt werden kann, wenn sich das Layout der rechten Linse von dem der linken Linse unterscheidet. Nach der JP 2008 009327 A umfasst das Färbeverfahren: einen Schritt, in dem für jede Brillenlinse eine vertikale Mittellinie in einer Linsenform nach der angenommenen Bearbeitung der Linse berechnet wird; einen Schritt, in dem basierend auf der vertikalen Mittellinie eine Abschlussposition für die Änderung der Färbekonzentration festgelegt wird; und einen Schritt, in dem die Brillenlinse in eine Färbeflüssigkeit mit einer Färbestartposition als unterem Teil und der Abschlussposition für die Änderung der Färbekonzentration als oberem Teil eingetaucht wird, und das Färben in einer solchen Weise durchgeführt wird, dass die Färbekonzentration von der Färbestartposition bis zur Abschlussposition für die Änderung der Färbekonzentration kontinuierlich verringert wird.

Um Linsengläser, insbesondere Brillengläser, zu färben, werden üblicherweise Färbebäder verwendet.

Ein hierzu ähnlicher Prozess ist die Beschichtung von Gläsern mittels einer Tauchlackbeschichtung. Während einer Tauchlackbeschichtung wird ein Linsenglas in eine flüssige Tauchlacklösung - auch Tauchlackbad genannt - in einen Tauchbadbehälter ein- und ausgetaucht. Dadurch wird das Linsenglas von der Tauchlacklösung benetzt. In einem anschließenden Trocknungs- oder Härtungsprozess wird die zunächst noch flüssige Lackschicht des Linsenglases in eine feste Lackschicht an der Oberfläche des Linsenglases überführt.

Hierdurch können Linsengläser mit einer funktionalen Schicht, wie zum Beispiel mit einer harten Schutzschicht, einer Färbungsschicht und/oder einer Verspiegelungs- oder Entspiegelungsschicht, versehen werden.

Aufgrund der Verwendung der Linsengläser als optische Elemente kann es wünschenswert bzw. wichtig sein, eine möglichst homogene und defektfreie Lackschicht zu gewährleisten. Defekte in der Lackschicht können zum Beispiel durch die Handhabung des Linsenglases während und nach einer Tauchlackbeschichtung auftreten, und einen negativen Einfluss auf die optischen Eigenschaften des Linsenglases haben.

Daher wird ein Linsenglas vor einer Tauchlackbeschichtung in einen Glashalter eingespannt, wodurch eine weitere Handhabung des Linsenglases, insbesondere während und nach einer Tauchlackbeschichtung, möglich ist, wobei das Linsenglas nur an wenigen Haltepunkten - vorzugsweise am Rand oder in der Nähe des Randes - gehalten wird. Dadurch können Defekte in der Lackschicht zumindest im optisch relevanten Bereich des Linsenglases vermieden oder reduziert werden. Der optisch relevante Bereich im Sinne der Erfindung ist derjenige Bereich des Linsenglases, der zum Einbetten in die Brillenfassung erhalten bleiben soll. Insbesondere kann der optisch relevante Bereich eine in internen Normen der Glashersteller definierte defektfreie Zone aufweisen.

Über die punktuelle Defektfreiheit hinaus stellt auch die Homogenität der Lackschicht ein wichtiges Qualitätskriterium dar. Ein erfindungsgemäßer Glashalter kann dabei in einer Ausführung auch dazu verwendet werden mittels einer entsprechenden Tauchvorrichtung automatisiert und insbesondere mit möglichst kontrollierter und reproduzierbarer (z.B. konstanter) Geschwindigkeit in das Tauchbad eingetaucht und aus dem Tauchbad wieder ausgetaucht zu werden.

Herkömmliche Glashaltevorrichtungen, die insbesondere für Tauchbadbeschichtungsverfahren von Linsengläsern verwendet werden, sind beispielsweise aus US 2010/0275839 A1, aus WO 2012/069757 A2 und aus JP 03 - 236 447 A bekannt. Weiterhin ist eine Glashaltevorrichtung aus dem deutschen Patent DE 10 2017 005 473 B3 bekannt.

Auch für das Färben von Gläsern kann eine gleichartige Halterung verwendet werden. Für die Produktion gradueller Färbungen kann es vorteilhaft bzw. nötig sein, die exakte Position der Gläser im Färbebadbehälter zu bestimmen. Erreicht werden kann diese Positionierung dadurch, dass Haltefedern zwischen Glas und Färbebadbehälter angebracht werden. Dieses Vorgehen ist jedoch sehr aufwendig, ungenau und fehleranfällig. Um die nötige Lage der Gläser zu erreichen, kann - wie im deutschen Patent DE 10 2017 005 473 B3 beschrieben - mit Haltefedern gearbeitet werden.

JP 2010 020138 A offenbart die Merkmale der Oberbegriffe der Ansprüche 1 und 7.

Ist jedoch der Durchmesser oder die Randdicke der Gläser in einem Paar stark unterschiedlich, kann dieser Ausgleich mit den Haltefedern nicht mehr erfolgen. Im schlechtesten Fall muss bei herkömmlicher Technik jedes Glas einzeln gefärbt werden.

Bei der Kombination aus Färbebadbehälter und Haltefeder kann zudem eine korrekte Position des Brillenglases nur abgeschätzt werden. Ein fester Halt des Glases im Färbebadbehälter kann mit dieser Methode nicht gewährleistet werden. D. h., diese bisherige Vorgehensweise ist zeitaufwändig und fehleranfällig.

Zum Färben von Brillengläsern werden nach betriebsinterner Praxis mehrere Brillengläser in einer Haltevorrichtung (z. B. einem Gitterkorb) nebeneinander angeordnet, welche dann an einem Haltepunkt der Haltevorrichtung (z. B. einem oberhalb der Brillengläser angebrachtem Bügel) von z. B. einem Roboterarm einer Färbeanlage in ein Färbebecken mit dem jeweiligen Farbstoff eingetaucht und wieder herausgezogen wird. Die Haltevorrichtung ist derart aufgebaut, dass Brillengläser unterschiedlichen Durchmessers gehalten werden können, wobei die entlang der Auszugsrichtung jeweils tiefsten Punkte der Brillengläser unterschiedlichen Durchmessers auf einer Achse liegen.

Für Unifärbungen ist dieses Verfahren sehr gut geeignet.

Verlaufsfärbungen können durch eine oszillierende Bewegung des Roboterarms erzeugt werden, wobei der Roboterarm dabei eine oszillierende Bewegung mit einer sich zeitlich veränderten Amplitude, d. h. mit variierender Eintauchtiefe in das Färbebecken, durchführt.

Für Verlaufsfärbungen können sich einer oder mehrere der folgenden Nachteile zeigen:
- Da Brillengläser unterschiedlichen Durchmessers nicht derart in der Haltevorrichtung angeordnet sind, dass ihre Mittelpunkte auf einer Achse liegen, sondern ihre jeweils untersten Punkte, weisen solcherart verlaufsgefärbte Brillengläser unterschiedlichen Durchmessers aufgrund der Eintauchtiefe bzw. Verweildauer im Färbebecken einen unterschiedlichen Verlauf auf;
- Brillengläser werden häufig im rohrunden Zustand gefärbt, doch die finale Form eines Brillenglases ist davon verschieden. Insbesondere je nach Verschreibung und/oder ausgesuchter Brillenfassung des Brillenträgers ist die finale Form (formgerandetes Brillenglas) nicht mittig im rohrunden Brillenglas angeordnet. Zusätzlich oder alternativ können zur Minimierung der Mittendicke rohrunde Gläser unterschiedlichen Durchmessers für eine Brillenfassung verwendet werden. In all diesen Fällen würde kein vergleichbarer Farbverlauf auf dem Glaspaar erzeugt werden.

Vor diesem Hintergrund ist nach einem Aspekt der vorliegenden Erfindung eine Aufgabe, eine graduelle Färbung bei Linsengläsern, besonders bevorzugt Brillengläsern, zu verbessern, vorzugsweise Mittel und/oder Verfahren bereitzustellen, die es erlauben, eine präzise(re) und zuverlässige(re) Positionierung bei der Herstellung von graduellen Färbungen bei Linsengläsern, besonders bevorzugt Brillengläsern, zur Verfügung zu stellen und/oder ein, vorzugsweise industriell anwendbares, Färbeverfahren bzw. eine entsprechende Färbeanlage bzw. eine in dieser Färbeanlage verwendete Färbe- bzw. Glashaltevorrichtung bzw. ein System mit der Glashaltevorrichtung bereitzustellen, wobei mit der Färbeanlage bzw. dem Färbeverfahren, vorzugsweise mit dem System, Linsengläser, insbesondere Brillengläser, unterschiedlichen Durchmessers in einer Stückzahl größer einer Einzelglasfertigung mit einem graduellen Farbverlauf versehen werden bzw. werden können, wobei vorzugsweise der graduelle Farbverlauf auf einem für einen Brillenträger vorgesehenen Brillenglaspaar identisch ist, vorzugsweise unabhängig davon, ob die dafür verwendeten, bevorzugt rohrunden, Brillengläser den gleichen Durchmesser aufweisen, und/oder unabhängig davon, wie die finale Form des Brillenglases in dem rohrunden Glas angeordnet ist.

Diese Aufgabe wird insbesondere gelöst durch wenigstens eine Glashaltevorrichtung zum Halten eines Linsenglases an dessen Rand, während einer Färbung in einem Färbebad, eine Färbeanlage bzw. ein System mit einer oder vorzugsweise mehreren hier beschriebenen Glashaltevorrichtungen und/oder eine(r) Einstellhilfe bzw. ein Verfahren zum graduellen Färben von Linsengläsern, insbesondere Brillengläsern, mithilfe einer hier beschriebenen Färbeanlage.

Nach einem Aspekt der vorliegenden Erfindung weist eine Färbeanlage, die zum graduellen Färben von Linsengläsern, vorzugsweise Brillengläsern, bzw. zur Durchführung eines hier beschriebenen Verfahrens eingerichtet ist bzw. verwendet wird, auf:
- einen oder mehrere Färbebadbehälter;
- einen oder mehrere Warenträger;
- eine erste Glashaltevorrichtung zum Halten eines ersten Linsenglases, insbesondere Brillenglases, an dessen Rand während einer Färbung in dem bzw. wenigstens einem der Färbebadbehälter; und
- eine Hebevorrichtung zum Heben und Senken des an der Hebevorrichtung befestigten Warenträgers zum Eintauchen und Herausheben des durch die erste Glasrandhalterung der mit der ersten Halteeinrichtung an dem Warenträger gehaltenen ersten Glashaltevorrichtung gehaltenen ersten Linsenglases in das bzw. aus dem Färbebadbehälter.

In einer Ausführung enthält der bzw. wenigstens einer der Färbebadbehälter bzw. Färbebecken mindestens einen in einem flüssigen Medium gelösten oder dispergierten nicht-funktionalen Farbstoff und/oder weist eine von Raumtemperatur verschiedene Temperatur auf.

In einer Ausführung weist die Färbeanlage bzw. ein System zusätzlich zu der ersten Glashaltevorrichtung, den bzw. wenigstens einen Warenträger und eine oder mehrere hier beschriebene Glashaltevorrichtungen, die ohne Beschränkung der Allgemeinheit (jeweils als eine) zweite Glashaltevorrichtung bezeichnet werden, zum gleichzeitigen Färben eines bzw. des ersten Linsenglases, welches durch die Glasrandhalterung der ersten Glashaltevorrichtung gehalten ist, welche mit ihrer Halteeinrichtung an diesem Warenträger gehalten ist, und eines oder mehrerer Linsengläser, insbesondere Brillengläser, welche(s) ohne Beschränkung der Allgemeinheit (jeweils) als ein zweites Linsenglas bezeichnet wird/werden und durch die Glasrandhalterung der (jeweiligen) zweiten Glashaltevorrichtung gehalten ist/sind, welche (jeweils) mit ihrer Halteeinrichtung ebenfalls an dem Warenträger gehalten ist/sind, auf. Bevorzugt liegt die Gesamtzahl der Glashaltevorrichtungen, die an dem Warenträger gehalten werden bzw. werden können, d. h. die Anzahl der zweiten Glashaltevorrichtungen zuzüglich eins (für die erste Glashaltevorrichtung) bei wenigstens 3, insbesondere wenigstens 5, in einer Ausführung wenigstens 7, und/oder bei höchstens 20, insbesondere höchstens 15, in einer Ausführung höchstens 13.

Nach einem Aspekt der vorliegenden Erfindung weist eine bzw. die (erste und/oder wenigstens eine zweite) Glashaltevorrichtung (jeweils) eine Glasrandhalterung zu einem Halten des (jeweiligen, insbesondere ersten bzw. zweiten) Linsenglases an einem Rand dieses Linsenglases während der Färbung auf.

In einer Ausführung weist diese Glasrandhalterung der (ersten und/oder wenigstens einen zweiten) Glashaltevorrichtung (jeweils)
- eine erste, vorzugsweise elastische, Glashalteeinrichtung mit einem ersten Glasrandhalteelement, zu einem Halten des (jeweiligen) Linsenglases an einem Rand dieses Linsenglases, an einer ersten Randseite, während der Färbung; und/oder
- eine zweite, vorzugsweise elastische, Glashalteeinrichtung mit einem zweiten Glasrandhalteelement, zum Halten des (jeweiligen) Linsenglases an dem Rand dieses Linsenglases, an einer zweiten Randseite, während der Färbung; und/oder
- einen zumindest teilweise umlaufenden Rahmen mit einem, insbesondere dritten, Glasrandhalteelement, zum Halten des (jeweiligen) Linsenglases an dem Rand des Linsenglases, an einer, vorzugsweise dritten und/oder unteren, Randseite, während der Färbung,
auf.

Nach einer Ausführung der vorliegenden Erfindung ist/sind bei einer bzw. der (ersten und/oder wenigstens einen zweiten) Glashaltevorrichtung (jeweils) die (erste bzw. zweite) Glasrandhalterung, vorzugsweise die erste Glashalteeinrichtung und/oder die zweite Glashalteeinrichtung und/oder der Rahmen, an einem (gemeinsamen) ersten Verbindungselement (dieser Glashaltevorrichtung) befestigt, wobei verschieb- und fixierbar relativ zu dem (jeweiligen) ersten Verbindungselement (jeweils) ein zweites Verbindungselement (dieser Glashaltevorrichtung) angeordnet ist, das eine (erste bzw. zweite) Halteeinrichtung (dieser Glashaltevorrichtung) für den(selben) Warenträger in dem Färbebadbehälter aufweist.

In einer Ausführung sind bei einer bzw. der (ersten und/oder wenigstens einen zweiten) Glashaltevorrichtung (jeweils) die erste Randseite und die zweite Randseite jeweils an einer linken Seite beziehungsweise an einer rechten Seite des Randes des Linsenglases angeordnet und/oder die dritte Randseite an einer unteren Seite des Randes des Linsenglases angeordnet.

In einer Weiterbildung der Erfindung können das erste Verbindungselement und das zweite Verbindungselement der (ersten und/oder wenigstens einen zweiten) Glashaltevorrichtung (jeweils) mittels einer Schraubverbindung fixiert werden.

Gemäß einer Weiterbildung der Erfindung ist die Verschiebbarkeit bei der (ersten und/oder wenigstens einen zweiten) Glashaltevorrichtung (jeweils) durch eine Zwangsbahn beschränkt, die in dem ersten Verbindungselement und/oder dem zweiten Verbindungselement bereitgestellt ist.

In einer weiteren Weiterbildung der Erfindung wird zur Einstellbarkeit der Verschiebung ein erstes Anzeigeelement bereitgestellt.

Die vorstehend genannte Aufgabe bzw. Erfindung wird nach einem Aspekt der vorliegenden Erfindung auch gelöst durch eine Einstellhilfe für eine bzw. die (erste und/oder wenigstens eine zweite) Glashaltevorrichtung.

Diese Einstellhilfe weist in einer Ausführung eine Aufnahme auf, in die das erste Verbindungselement und das zweite Verbindungselement eingelegt werden können, wobei weiterhin ein zweites Anzeigeelement bereitgestellt wird, wobei im Zusammenspiel mit einem ersten Anzeigeelement an der Glashaltevorrichtung eine definierte Position von dem ersten Verbindungselement zu dem zweiten Verbindungselement eingestellt werden kann.

In einer Ausführung wird an der Einstellhilfe eine definierte Position für den zumindest teilweise umlaufenden Rahmen bereitgestellt.

In einer Weiterbildung der Erfindung weist die Einstellhilfe eine Fläche von mindestens der Größe des zumindest teilweise umlaufenden Rahmens und des ersten Verbindungselements auf, wobei für den zumindest teilweise umlaufenden Rahmen ein Anschlag gebildet ist.

Gemäß einer Weiterbildung der Erfindung weist das zweite Anzeigeelement eine Skala auf.

Die vorstehend genannte Aufgabe bzw. Erfindung wird nach einem Aspekt der vorliegenden Erfindung ebenfalls gelöst durch ein bzw. das System aufweisend wenigstens eine hier, insbesondere zuvor, beschriebene Glashaltevorrichtung und eine hier, insbesondere zuvor, beschriebene Einstellhilfe.

In einer Ausführung weist das System weiterhin ein Berechnungsmittel auf, wobei das Berechnungsmittel basierend auf einem gewünschten Farbverlauf die Einstellposition für das erste Verbindungselement relativ zu dem zweiten Verbindungselement (der jeweiligen Glashaltevorrichtung) bestimmt, die mittels des ersten Anzeigeelements relativ zu dem zweiten Anzeigeelement eingestellt werden soll.

Gemäß einer Weiterbildung der Erfindung ermittelt das Berechnungsmittel die Einstellposition basierend auf einem Wert, welcher auf die geometrische Mitte bezogen ist.

Nach einem Aspekt der vorliegenden Erfindung weist ein Verfahren zum graduellen Färben von Linsengläsern, insbesondere Brillengläsern, mithilfe einer hier beschriebenen Färbeanlage die im Anspruch 1 definierten Schritte auf:
- Anordnen, vorzugsweise Halten, insbesondere Einlegen, des zu färbenden, insbesondere rohrunden, ersten Linsenglases an der bzw. durch bzw. in die erste(n) Glashaltevorrichtung;
- Einstellen einer Länge eines durch das erste und zweite Verbindungselement sowie die Halteeinrichtung und Glasrandhalterung gebildeten Haltearms der ersten Glashaltevorrichtung durch Fixieren und gegebenenfalls Verschieben des ersten und zweiten Verbindungselements relativ zueinander;
- Durchführen eines Färbeprozesses zum Erhalt von graduell gefärbten Linsengläsern, insbesondere Brillengläsern, wobei der Färbeprozess
   - ein Eintauchen des ersten Linsenglases, welches durch die erste Glasrandhalterung der ersten Glashaltevorrichtung gehalten ist bzw. wird, welche ihrerseits mit der ersten Halteeinrichtung an dem Warenträger gehalten ist bzw. wird, in den Färbebadbehälter mithilfe der hierzu gesteuerten Hebevorrichtung; und
   - ein Herausheben des durch die erste Glasrandhalterung der - mit der ersten Halteeinrichtung an dem Warenträger gehaltenen - ersten Glashaltevorrichtung gehaltenen ersten Linsenglases aus dem Färbebadbehälter mithilfe der hierzu gesteuerten Hebevorrichtung
   umfasst; und
- Entnehmen des graduell gefärbten ersten Linsenglases aus der ersten Glashaltevorrichtung.

In einer Ausführung umfasst der Färbeprozess ein mehrfaches Eintauchen und Herausheben, vorzugsweise mittels einer oszillierenden Bewegung der Hebevorrichtung, an der in einer Ausführung der Warenträger gehalten ist bzw. wird, und/oder mit einer sich zeitlich veränderten Amplitude, d. h. mit variierender Eintauchtiefe. Hierdurch kann in einer Ausführung vorteilhaft eine graduelle Färbung bzw. ein graduelles Färben des ersten Linsenglases zur Verfügung gestellt bzw. realisiert werden.

Durch die Einstellbarkeit bzw. Einstellung der Länge des Haltearms bzw. der Position der beiden Verbindungselemente relativ zueinander kann in einer Ausführung eine Position, insbesondere Höhe, des Linsenglases relativ zu dem Warenträger bzw. der Hebevorrichtung präzise und/oder variabel, vorzugsweise individuell bzw. linsenglasspezifisch, eingestellt und so das graduelle Färben verbessert werden.

In einer Ausführung, in der die Färbeanlage die bzw. eine oder mehrere der zweite(n) Glashaltevorrichtung(en) zum Halten (je) eines zweiten Linsenglases, insbesondere Brillenglases, an dessen Rand während einer Färbung in dem Färbebadbehälter aufweist, weist das Verfahren die folgenden Schritte auf:
- Anordnen, vorzugsweise Halten, insbesondere Einlegen, des (jeweiligen) zu färbenden, vorzugsweise rohrunden, zweiten Linsenglases an der bzw. durch bzw. in die (jeweilige(n)) zweite(n) Glashaltevorrichtung;
- Einstellen einer Länge eines durch das erste und zweite Verbindungselement sowie die Halteeinrichtung und Glasrandhalterung der (jeweilige) zweiten Glashaltevorrichtung gebildeten Haltearms der (jeweilige) zweiten Glashaltevorrichtung durch Fixieren und gegebenenfalls Verschieben dieses ersten und zweiten Verbindungselements relativ zueinander;
- Durchführen des Färbeprozesses zum Erhalt von graduell gefärbten Linsengläsern, insbesondere Brillengläsern, wobei der Färbeprozess ein gleichzeitiges Eintauchen und Herausheben
   - des durch die erste Glasrandhalterung der mit der ersten Halteeinrichtung an dem Warenträger gehaltenen ersten Glashaltevorrichtung gehaltenen ersten Linsenglases; und
   - des zweiten Linsenglases bzw. der zweiten Linsengläser, welche(s) durch die (jeweilige) zweite Glasrandhalterung der (jeweiligen) zweiten Glashaltevorrichtung gehalten ist/sind bzw. wird/werden, welche ihrerseits mit der (jeweiligen) zweiten Halteeinrichtung an dem Warenträger gehalten ist/sind bzw. wird/werden
   in das bzw. aus dem Färbebadbehälter mithilfe der hierzu gesteuerten Hebevorrichtung umfasst; und
- Entnehmen des graduell gefärbten zweiten Linsenglases bzw. der graduell gefärbten zweiten Linsengläser aus der (jeweiligen) zweiten Glashaltevorrichtung.

In einer Ausführung sind bzw. werden die Hebevorrichtung und der Warenträger zum Heben und Senken des an der Hebevorrichtung befestigten Warenträgers zum gleichzeitigen Eintauchen und Herausheben
- des durch die erste Glasrandhalterung der mit der ersten Halteeinrichtung an dem Warenträger gehaltenen ersten Glashaltevorrichtung gehaltenen ersten Linsenglases und
- des bzw. der durch die (jeweilige) zweite Glasrandhalterung der mit der (jeweiligen) zweiten Halteeinrichtung an dem Warenträger gehaltenen (jeweiligen) zweiten Glashaltevorrichtung gehaltenen zweiten Linsenglases/-gläser
in das bzw. aus dem Färbebadbehälter eingerichtet bzw. verwendet.

Durch die, vorzugsweise individuelle bzw. linsenglasspezifische bzw. unterschiedliche, Einstellbarkeit bzw. Einstellung der (jeweiligen) Länge der Haltearme bzw. der (jeweiligen) Position der beiden Verbindungselemente relativ zueinander können in einer Ausführung Positionen, insbesondere Höhen, der Linsengläser relativ zu dem Warenträger bzw. der Hebevorrichtung, individuell bzw. linsenglasspezifisch bzw. unterschiedlich eingestellt und so das gleichzeitige graduelle Färben mehrerer Linsengläser signifikant verbessert werden, insbesondere gegenüber herkömmlichen Lösungen, bei denen Gläser, die unterschiedliche Durchmesser aufweisen und/oder die finale Form (formgerandetes Brillenglas) nicht mittig im rohrunden Glas angeordnet ist, mit ihren jeweils untersten Punkten auf einer Achse liegen und dadurch einzelne Gläser nicht den gewünschten Farbverlauf aufweisen bzw. erhalten.

In einer Ausführung umfasst das Verfahren einen oder mehrere der folgenden Schritte:
- Bereitstellen des zu färbenden ersten Linsenglases und/oder des zu färbenden zweiten Linsenglases bzw. der zu färbenden zweiten Linsengläser (jeweils) als rohrundes Linsenglas, insbesondere Brillenglas;
- Einlesen von Linsenglasbestelldaten für das zu färbende erste Linsenglas und/oder das bzw. eines oder mehrerer der zweite(n) Linsenglas/-gläser, vorzugsweise
   - eines Durchmessers des (jeweiligen) rohrunden Linsenglases,
   - einer optischen Wirkung des (jeweiligen) rohrunden Linsenglases,
   - (Daten) einer geometrischen, vorzugsweise finalen, Form des Linsenglases nach erfolgter Formrandung und/oder
   - einer, vorzugsweise kundenseitigen, Vorgabe für einen Färbeverlauf, vorzugsweise eines Färbeverlaufspunktes;
- Ermitteln, insbesondere Bestimmen, eines Färbeverlaufsparameters, vorzugsweise eines Färbeverlaufspunktes, des zu färbenden ersten Linsenglases und/oder des bzw. eines oder mehrerer der zweite(n) Linsenglases/-gläser, in einer Weiterbildung:
   - Auslesen eines empirischen Wertes für den Färbeverlaufsparameter auf Basis der eingelesenen Linsenglasbestelldaten, vorzugsweise des Durchmessers des rohrunden Linsenglases;
   - Berechnen des Färbeverlaufsparameters als geometrischer Mittelpunkt des Kastenmaßes; oder
   - Berechnen des Färbeverlaufsparameters anhand übermittelter, vorzugsweise der eingelesenen, Linsenglasbestelldaten;
- individuelles, linsenglasspezifisches, insbesondere unterschiedliches, Einstellen der Länge des Haltearms der ersten Glashaltevorrichtung und/oder des Haltearms der bzw. einer oder mehrerer der zweiten Glashaltevorrichtung(en), vorzugsweise (jeweils) auf Basis des (für das entsprechende Linsenglas) ermittelten Färbeverlaufsparameters;
- Bestücken des Waren- bzw. Färbeträgers mit der ersten und/oder der bzw. den zweiten Glashaltevorrichtung(en), wobei in einer Ausführung die Färbe- bzw. Glashaltevorrichtung(en) mit ihrem (jeweiligen) Aufnahmeelement an dem Waren- bzw. Färbeträger befestigt wird/werden;
- Befestigen des, vorzugsweise mit der ersten und/oder der bzw. zweiten Glashaltevorrichtung(en) bestückten, Warenträgers an der Hebevorrichtung;
- Steuern der Hebevorrichtung zum Durchführen des Färbeprozesses auf Basis eines Färbeprogramms, vorzugsweise mittels einer (hierzu eingerichteten) Steuer(ungs)einheit der Färbeanlage, vorzugsweise der Hebevorrichtung;
- Lösen, insbesondere Abnehmen, des Warenträgers von der Hebevorrichtung nach erfolgtem Färben; und/oder
- Lösen, insbesondere Abnehmen, der ersten und/oder zweiten Glashaltevorrichtung(en) von dem Warenträger.

Durch einen oder mehrere dieser Schritte kann in einer Ausführung eine graduelle Färbung bzw. ein graduelles Färben des ersten Linsenglases und/oder des bzw. der zweiten Linsenglases/-gläser verbessert werden, vorzugsweise mehrere Linsengläser gleichzeitig, insbesondere industriell, jeweils vorteilhaft, insbesondere präzise(r), prozesssicher(er), rasch(er), kunden(wunsch)spezifisch und/oder spezifisch, graduell gefärbt werden.

Soweit das Verfahren einen oder mehrere, vorzugsweise alle, der vorgenannten Schritte aufweist, werden diese in einer bevorzugten Ausführung chronologisch in der Reihenfolge ihrer obigen Aufzählung bzw. ihrer Aufzählung in den Ansprüchen durchgeführt, ohne dass die Erfindung hierauf beschränkt ist. Zusätzlich oder alternativ werden in einer Ausführung die Schritte Bereitstellen, Einlesen von Linsenglasbestelldaten, Ermitteln eines Färbeverlaufsparameters, Anordnen des Linsenglases an der Glashaltevorrichtung, Einstellen einer Länge des Haltearms und/oder Bestücken des Färbe- bzw. Warenträgers bzw. der Schritte S100 bis S110 ein- oder mehrfach wiederholt, um mehrere zu färbende, vorzugsweise rohrunde, Linsen-, insbesondere Brillengläser auf Färbe- bzw. Glashaltevorrichtungen anzuordnen und diese Färbe- bzw. Glashaltevorrichtungen am Färbe- bzw. Warenträger zu befestigen.

Entsprechend kann es besonders vorteilhaft sein, zunächst das jeweilige Linsenglas an der jeweiligen Glashaltevorrichtung anzuordnen bzw. zu halten, diese (bestückten) Glashaltevorrichtung(en) an dem Warenträger zu halten bzw. befestigen, und dann diesen (bestückten) Glashaltevorrichtung(en) an der Hebevorrichtung zu halten bzw. befestigen, wobei in einer Weiterbildung vor, bei oder - besonders bevorzugt - nach dem Bestücken der Glashaltevorrichtung(en) mit dem (jeweiligen) Linsenglas die Länge ihres Haltearms eingestellt wird, vorzugsweise vor dem Bestücken des Warenträgers mit der (jeweiligen) Glashaltevorrichtung und/oder dem Bestücken der Hebevorrichtung mit dem Warenträger. Gleichermaßen kann es entsprechend besonders vorteilhaft sein, zunächst den Warenträger nach erfolgtem Färben von der Hebevorrichtung zu lösen, dann die Glashaltevorrichtung(en) von dem (abgenommenen) Warenträger zu lösen und dann das jeweilige Linsenglas von der jeweiligen (abgenommenen) Glashaltevorrichtung zu lösen. Wie erwähnt, ist die Erfindung jedoch weder auf diese Reihenfolge noch darauf beschränkt, dass alle Schritte vorhanden sind bzw. durchgeführt werden.

In einer Ausführung weist die Hebevorrichtung wenigstens einen Roboterarm, an dem der bzw. in einer bevorzugten Weiterbildung, vorzugsweise alternativ bzw. alternierend bzw. sequentiell, zwei oder mehr Warenträger gehalten bzw. befestigt werden bzw. sind bzw. der hierzu eingerichtet ist bzw. verwendet wird, und/oder eine bzw. die Steuer(ungs)einheit auf. Hierdurch kann in einer Ausführung die Handhabung und/oder Färbung der Linsengläser bzw. die Handhabung des bzw. der mit diesen bestückten Warenträger(s) verbessert werden, in einer Weiterbildung eine Eintauchbewegung, Heraushebebewegung und/oder Transferbewegung zum und von dem Färbebadbehälter optimiert werden.

In einer Ausführung weist die (erste und/oder wenigstens eine zweite) Glashaltevorrichtung (jeweils) einen Aktuator auf, mit dem bzw. durch den das erste und zweite Verbindungselement dieser Glashaltevorrichtung relativ zueinander verschoben und/oder fixiert wird bzw. werden kann bzw. der hierzu eingerichtet ist bzw. gesteuert wird bzw. werden kann.

Dadurch kann in einer Ausführung das Verfahren beschleunigt und/oder die Präzision erhöht werden.

In einer Ausführung umfasst das Ermitteln eines Färbeverlaufsparameters des zu färbenden (ersten bzw. zweiten) Linsenglases (jeweils) ein, vorzugsweise individuelles bzw. linsenglasspezifisches, Ermitteln, insbesondere Bestimmen, eines (virtuellen) Färbeverlaufs- bzw. Referenzpunktes (für dieses Linsenglas), in einer Weiterbildung
- seines Abstandes bzw. seiner Höhe relativ zu einem geometrischen Mittelpunkt des rohrunden Linsenglases oder dessen Kastenmaßes oder des formgerandeten Brillenglases oder dessen Kastenmaßes oder relativ zu einem Nahdurchblickpunkt oder Ferndurchblickpunkt des formgerandeten Brillenglases, und/oder
- auf Basis einer, vorzugsweise kundenseitigen, Vorgabe zu einem gewünschten graduellen Farbverlauf.

Vorzugsweise entspricht dieser Färbeverlaufspunkt defaultmäßig bzw. sofern kundenseitig keine Abweichung vorgegeben ist bzw. wird, einem geometrischen Mittelpunkt des formgerandeten Brillenglases bzw. dessen Kastenmaßes, und/oder liegt, vorzugsweise bei bzw. infolge einer entsprechenden, vorzugsweise kundenseitigen, Vorgabe, auf Höhe eines, insbesondere in einem, Nahdurchblickpunkt oder Ferndurchblickpunkt, insbesondere bei einem progressiven Brillenglas.

In einer Ausführung wird die Länge des Haltearms der (jeweiligen) Glashaltevorrichtung für dieses Linsenglas auf Basis dieses Färbeverlaufspunktes eingestellt, in einer Weiterbildung derart bzw. mit der Maßgabe, dass der Färbeverlaufspunkt eine definierte Höhe relativ zu der Halteeinrichtung dieser Glashaltevorrichtung bzw. dem Warenträger aufweist und/oder derart bzw. mit der Maßgabe, dass die Färbeverlaufspunkte von wenigstens zwei, vorzugsweise allen, Linsengläsern eines (mit diesen Linsengläsern bestückten) Warenträgers dieselbe Höhe relativ zu dem Warenträger aufweisen bzw. bei an dem Warenträger angeordneten und mit diesen Linsengläsern bestückten Glashaltevorrichtungen auf einer (gemeinsamen) Achse liegen.

Nach einem Aspekt der vorliegenden Erfindung weist eine Glashaltevorrichtung, die vorliegend auch als Färbevorrichtung bezeichnet wird, eine Haltevorrichtung, die vorliegend auch als Glasrandhalterung bezeichnet wird, mit einer Einzelglasaufnahme auf, wie sie hier oder z. B. in DE 10 2017 005 473 B3 offenbart ist.

In einer Ausführung kann in der Einzelglasaufnahme ein Brillenglas fest gehalten werden, wobei unter fest insbesondere verstanden wird, dass es bei oszillierender Bewegung eines Roboterarms einer Färbeanlage beim Eintauchen und Herausziehen aus einem mit einer Flüssigkeit gefüllten Becken (diese Bewegung wird vorzugsweise wenigstens im Wesentlichen in vertikaler Richtung vollzogen) sowie bei den dabei auftretenden Vibrationen in der Haltevorrichtung fest verbleibt, d. h. seine Position nicht ändert, sich nicht verkippen oder verdrehen kann, und sich nicht herauslösen kann.

Die Einzelglasaufnahme ist in einer Ausführung derart ausgeprägt, dass ein Brillenglas an seinem tiefsten Punkt ("unten") gehalten wird. Zusätzlich können noch weitere Halterungen vorhanden sein, welche das Brillenglas auch in horizontaler Richtung festhalten.

Ferner weist die Haltevorrichtung in einer Ausführung oberhalb des in der Einzelglasaufnahme aufgenommenen Brillenglases einen teleskopartigen bzw. in seiner Länge verschiebbaren Haltearm auf, welcher an seinem oberen Ende ein Aufnahmeelement für den Roboterarm aufweist, welches vorliegend auch als Halteeinrichtung bezeichnet wird.

Der teleskopartige bzw. in seiner Länge verschiebbare Haltearm wird in einer Ausführung durch das erste und zweite Verbindungselement der jeweiligen Glashaltevorrichtung sowie deren Halteeinrichtung und Glasrandhalterung gebildet, wobei das erste Verbindungselement und/oder das zweite Verbindungselement jeweils ein- oder mehrstückig (ausgebildet) sein können. In einer Ausführung weist das erste Verbindungselement eine einstellbare Länge auf, in einer Weiterbildung jeweils zwei oder mehr Verbindungselementteile, die ihrerseits verschieb- und fixierbar relativ zueinander angeordnet sind. Alternativ weist das erste Verbindungselement in einer Ausführung eine feste Länge auf. Zusätzlich oder alternativ weist in einer Ausführung das zweite Verbindungselement eine einstellbare Länge auf, in einer Weiterbildung jeweils zwei oder mehr Verbindungselementteile, die ihrerseits verschieb- und fixierbar relativ zueinander angeordnet sind. Alternativ weist das zweite Verbindungselement in einer Ausführung eine feste Länge auf. Beispielsweise kann also ein viergliedriger Teleskophaltearm ein erstes Verbindungselement, das durch die ersten beiden Teleskopglieder gebildet ist und entsprechend eine einstellbare Länge aufweist, und ein zweites Verbindungselement, das durch die anderen beiden Teleskopglieder gebildet ist, entsprechend ebenfalls eine einstellbare Länge aufweist und verschieb- und fixierbar relativ zu diesem ersten Verbindungselement angeordnet ist, bzw. ein erstes Verbindungselement, das durch das erste Teleskopglied gebildet ist und entsprechend eine feste Länge aufweist, und ein zweites Verbindungselement, das durch die drei anderen Teleskopglieder gebildet ist, entsprechend eine einstellbare Länge aufweist und verschieb- und fixierbar relativ zu diesem ersten Verbindungselement angeordnet ist, aufweisen.

Durch Ein- bzw. Verstellen der Länge des Haltearms kann in einer Ausführung die Position der Einzelglasaufnahme, d. h. die Position des in der Einzelglasaufnahme gehaltenen Brillenglases, in Bezug auf das Aufnahmeelement des Roboterarms verändert werden.

In einer Ausführung können mehrere solcher Haltevorrichtungen mittels ihrer Aufnahmeelemente am Roboterarm des Färbesystems angeschlossen werden.

Durch Einstellen der Länge des Haltearms einer jeden Haltevorrichtung am Roboterarm der Färbeanlage kann in einer Ausführung bei durch die Färbeanlage für den Roboterarm vorgegebenen Eintauchtiefe eine für jede Haltevorrichtung individuelle Eintauchtiefe, in anderen Worten eine Art Offset, erhalten werden, wodurch vorteilhafterweise eine Vielzahl von Gläsern in industriellem Maßstab mit einem graduellen Färbeverlauf versehen werden können und gleichzeitig individuelle Gegebenheiten wie Glasdurchmesser oder dergleichen berücksichtigt werden können.

In einer Ausführung kann zum vereinfachten Einstellen der Länge des Haltearms der Haltevorrichtung an der Haltevorrichtung eine Skala angebracht sein, welche geeignet ist, die Länge des Haltearms der Haltevorrichtung auf einen vorgegebenen Wert einzustellen.

In einer Ausführung kann die Länge des Haltearms der Haltevorrichtung dadurch erleichtert eingestellt werden, indem die Länge des Haltearms mittels einer Justagevorrichtung eingestellt wird, welche neben einer Aufnahme für die Haltevorrichtung eine Skala aufweist, welche geeignet ist, die Länge des Haltearms der Haltevorrichtung auf einen vorgegebenen Wert einzustellen, und vorliegend auch als Einstellhilfe bezeichnet wird.

In einer Ausführung weist die Haltevorrichtung einen Aktuator auf, welcher Steuerbefehle empfangen kann und gemäß den empfangenen Steuerbefehlen die Länge des Haltearms der Haltevorrichtung einstellt.

Bei einem solchen vorgegebenen Wert kann es sich insbesondere um einen Färbeverlaufspunkt handeln. Der Färbeverlaufspunkt kann in einer Ausführung ein empirisch ermittelter Wert sein, welcher vom Durchmesser des zu färbenden Glases abhängig ist. Alternativ kann der Färbeverlaufspunkt auch eine berechnete Größe sein, welche sich aus dem Kastenmaß des Brillenglases errechnet und zum Beispiel das geometrische Mittel des Kastenmaßes ist. Der Färbeverlaufspunkt kann auch eine Größe sein, welche im Rahmen des Bestellprozesses festgelegt werden kann. Der Färbeverlaufspunkt kann auch eine Größe sein, welche aus den Bestelldaten berechnet wird und zum Beispiel bei Progressivgläsern abhängig von Nah- und Fernteil ist.

Die Unteransprüche betreffen vorteilhafte Weiterbildungen.

In einer Ausführung werden ein oder mehrere Schritte des Verfahrens vollständig oder teilweise automatisiert durchgeführt, insbesondere durch die Färbeanlage bzw. ihre Komponenten.

Mit besonderem Vorteil kann die Erfindung für Linsengläser, besonders vorteilhaft für Brillengläser, eingesetzt bzw. verwendet werden.

In einer Ausführung wird vorteilhaft, insbesondere durch entsprechendes Einstellen der Länge des Haltearms, der Farb- bzw. Färbungsverlauf auf das formgerandete Linsen-, insbesondere Brillenglas angepasst. In einer Ausführung ermöglicht die Erfindung eine Anpassung an spezielle Kundenwünsche und/oder eine vorteilhafte gleichzeitige Bearbeitung mehrerer (Färbe)Aufträge.

In einer Ausführung umfasst die Ermittlung einer Färbeverlaufshöhe bzw. eines Färbeverlaufspunktes einen oder mehrere der Schritte:
Erfassen eines geometrischen Mittelpunktes des formgerandeten Brillenglases oder eines Fern- oder Nahdurchblickpunktes, vorzugsweis bei progressiven Gläsern;
Erfassen möglicher Kundenwünsche zur Verlaufsart und -höhe;
Bestimmen des Färbeverlaufspunktes, insbesondere auf Basis dieser erfassten Größe(n);
in einer Ausführung Ermittlung der relativen Höhe des Färbeverlaufspunktes in Bezug zu einer unteren Randnut, die eine 270°-Achsmarkierung als Bezugspunkt für die Orientierung des rohrunden Glases sein kann;
Angabe der Höhe als Einstellmaß für die Haltearmlänge, insbesondere digital oder analog.

Wie bereits erläutert, kann der Färbeverlaufspunkt ein virtueller Punkt sein, der bei der Auftragserstellung bestimmt wird und/oder als Referenzpunkt der (Farb- bzw. Färbungs)Verlaufshöhe dient, um die richtige Positionierung des rohrunden Glases beim graduellen bzw. Verlaufsfärben zu gewährleisten. Vorzugsweise liegt er im Normalfall im Mittelpunkt des Kastenmaßes des formgerandeten Glases, optional kann bei der Bestimmung des Punktes auch ein Kundenwunsch berücksichtigt werden, insbesondere, den Verlauf in den Fern- oder Nahdurchblickpunkt zu legen.

Weitere Vorteile und Merkmale ergeben sich aus den Unteransprüchen und den Ausführungsbeispielen. Hierzu zeigt, teilweise schematisiert:
- Fig. 1:: schematisch einen Warenträger mit Glashaltevorrichtungen gemäß Ausführungsformen der Erfindung;
- Fig. 2:: schematisch eine Frontansicht einer Glashaltevorrichtung gemäß Ausführungsformen der Erfindung;

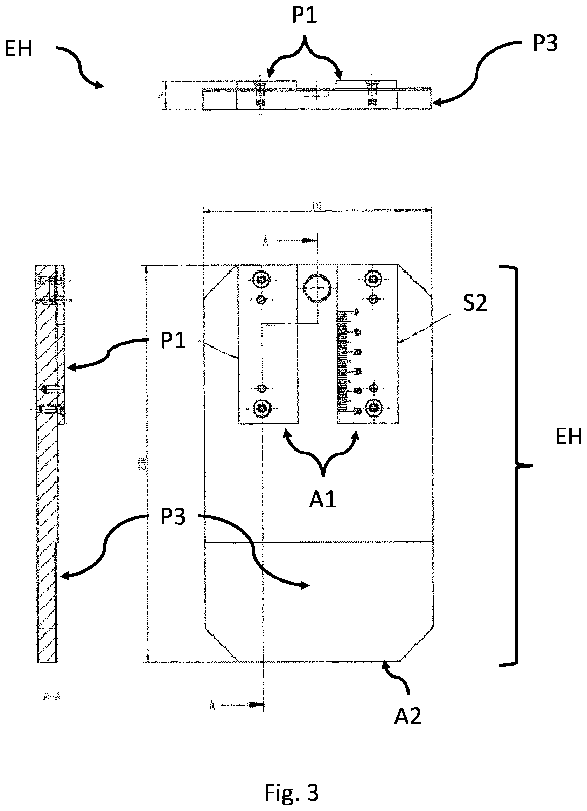

- Fig. 3:: schematische Ansichten einer Einstellhilfe gemäß Ausführungsformen der Erfindung;
- Fig. 4:: eine perspektivisch schematische Ansicht einer Glashaltevorrichtung gemäß Ausführungsformen der Erfindung in Relation zu einer Einstellhilfe gemäß Ausführungsformen der Erfindung;
- Fig. 5:: unterschiedliche Ansichten eines zweiten Verbindungselementes gemäß Ausführungsformen der Erfindung;
- Fig. 6:: ein Detail einer Ausführungsform eines Warenträgers gemäß Ausführungsformen der Erfindung;
- Fig. 7:: ein Detail eines Dämpfungselementes zur Verwendung in einem Warenträger gemäß Ausführungsformen der Erfindung;
- Fig. 8:: einen mit Glashaltevorrichtungen bestückten Warenträger einer Färbeanlage gemäß Ausführungsformen der Erfindung;
- Fig. 9:: die drei Linsengläser einer Abwandlung der Fig. 8 in Draufsicht;
- Fig. 10:: ein Verfahren zum graduellen Färben von Linsengläsern gemäß Ausführungsformen der Erfindung; und
- Fig. 11:: den Warenträger T der Fig. 8 in perspektivischer Ansicht mit zwei der drei Glashaltevorrichtungen.

Die vorliegende Offenbarung beschreibt bevorzugte Ausführungsformen unter Bezugnahme auf die Figuren, in denen gleiche Referenzzeichen die gleichen oder ähnliche Elemente repräsentieren.

Bezugnahmen in dieser Spezifikation auf "eine Ausführungsform" oder in ähnlicher Sprache bedeuten, dass ein/e bestimmte/s Merkmal, Struktur oder Eigenschaft, die in Verbindung mit der Ausführungsform beschrieben wird, in mindestens einer Ausführungsform der vorliegenden Erfindung enthalten ist. Somit kann sich die Formulierung "in einer Ausführungsform" und ähnliche Sprache in dieser Spezifikation stets auf die gleiche Ausführungsform beziehen, muss dies aber nicht.

Die beschriebenen Merkmale, Strukturen oder Charakteristika der Erfindung können auf jedwede geeignete Weise in einer oder mehreren Ausführungsformen kombiniert werden. In der Beschreibung werden zahlreiche spezifische Einzelheiten angeführt, um ein genaues Verständnis der Ausführungsformen der Erfindung zu ermöglichen. Das heißt, sofern nur als Alternative angegeben, kann ein Merkmal einer Ausführungsform auch in einer anderen Ausführungsform verwendet werde, sofern sie unter den Schutzbereich der beigefügten Ansprüche fallen.

Auch wenn in manchen Fällen bestimmte Merkmale in Bezug auf eine einzelne Entität beschrieben werden, dient solch eine Beschreibung darüber hinaus nur zu veranschaulichenden Zwecken und tatsächliche Implementierungen der Erfindung können auch eine oder mehrere dieser Entitäten umfassen. Das heißt, Verwendung des Singulars schließt auch plurale Entitäten mit ein, sofern nicht anders angegeben.

In einer beispielhafte Ausführungsform gemäß der Erfindung kommt eine Glashaltevorrichtung G zum Halten eines Linsenglases an dessen Rand während einer Färbung in einem Färbebad zum Einsatz.

Die Glashaltevorrichtung G weist eine erste elastische Glashalteeinrichtung GH1 mit einem ersten Glasrandhalteelement zu einem Halten des Linsenglases an einem Rand des Linsenglases an einer ersten Randseite während der Färbung auf.

Weiterhin weist die Glashaltevorrichtung G eine zweite elastische Glashalteeinrichtung GH2 mit einem zweiten Glasrandhalteelement zum Halten des Linsenglases an dem Rand des Linsenglases an einer zweiten Randseite während der Färbung auf.

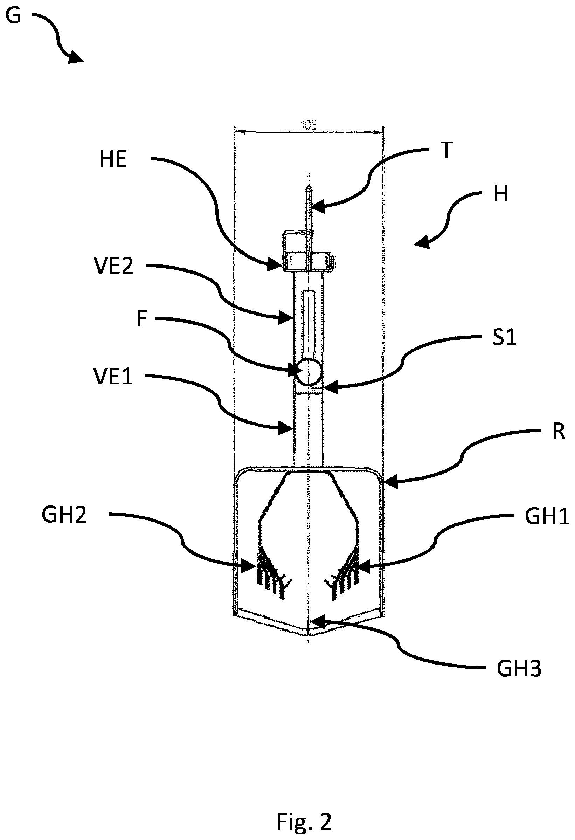

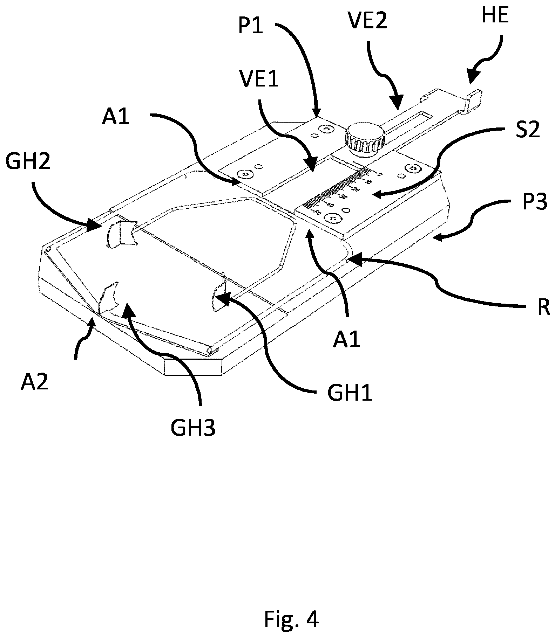

Die erste elastische Glashalteeinrichtung GH1 und die zweite elastische Glashalteeinrichtung GH2 sind bevorzugt gleichartig aufgebaut. Beispielsweise sind die erste elastische Glashalteeinrichtung GH1 und die zweite elastische Glashalteeinrichtung GH2 spiegelsymmetrisch zueinander ausgeführt. Beide zusammen sind dabei in der Ausführungsform der Figur 2 und 4 so angeordnet, dass sie ein Linsenglas halten können.

Die erste elastische Glashalteeinrichtung GH1 und die zweite elastische Glashalteeinrichtung GH2 können - wie dargestellt -- Teil eines einstückigen Bauteils sein.

Weiterhin weist die Glashaltevorrichtung G einen zumindest teilweise umlaufenden Rahmen R mit einem dritten Glasrandhalteelement GH3 zum Halten des Linsenglases an dem Rand des Linsenglases an einer dritten Randseite während der Färbung auf.

Das dritte Glasrandhalteelement GH3 kann dabei versetzt zu einer gedachten Verbindungslinie zwischen der ersten elastischen Glashalteeinrichtung GH1 und der zweiten elastischen Glashalteeinrichtung GH2, angeordnet sein. Besonders bevorzugt ist es, wenn das dritte Glasrandhalteelement GH3 senkrecht zur Mitte der gedachten Verbindungslinie angeordnet ist. Mit einer solchen Dreipunkt-Fixierung kann eine besonders sichere Halterung bereitgestellt werden.

Die erste Randseite und die zweite Randseite sind dann jeweils an einer linken Seite beziehungsweise an einer rechten Seite des Randes des Linsenglases angeordnet und die dritte Randseite ist an einer unteren Seite des Randes des Linsenglases angeordnet.

Der Rahmen R mit dem dritten Glasrandhalteelement GH3 kann ebenfalls einstückig ausgeführt sein. Ebenso ist es möglich, dass die erste elastische Glashalteeinrichtung GH1 und die zweite elastische Glashalteeinrichtung GH2 und der Rahmen R mit dem dritten Glasrandhalteelement GH3 Teil eines einstückigen Bauteils sind.

Die erste elastische Glashalteeinrichtung GH1, die zweite elastische Glashalteeinrichtung GH2 und der zumindest teilweise umlaufende Rahmen R sind an einem gemeinsamen ersten Verbindungselement VE1 befestigt.

Relativ zu dem ersten Verbindungselement VE1 ist ein zweites Verbindungselement VE2 verschieb- und fixierbar angeordnet. Das zweite Verbindungselement VE2 weist eine Halteeinrichtung HE für einen Warenträger T in einem Färbebadbehälter auf.

Gemäß einer Ausführungsform der Erfindung kann das erste Verbindungselement VE1 und das zweite Verbindungselement VE2 mittels einer Schraubverbindung F fixiert werden. Hierzu kann eine Rändelmutter und eine Schraube vorgesehen sein, um das erste Verbindungselement VE1 und das zweite Verbindungselement VE2 pressend relativ zueinander zu fixieren.

In einer Weiterbildung der Erfindung wird die Verschiebbarkeit durch eine Zwangsbahn beschränkt, die in dem ersten Verbindungselement VE1 und/oder dem zweiten Verbindungselement VE2 bereitgestellt ist. Beispielsweise kann - wie aus Figur 2 ersichtlich - in dem ersten Verbindungselement ein Langloch angeordnet sein, das passend zur Größe einer Schraube einer Schraubverbindung F ausgeformt ist, sodass die Schraube der Schraubverbindung F in dem Langloch - solange die Rändelmutter nicht angezogen ist - verschoben werden kann.

Gemäß einer Ausgestaltung der Erfindung wird zur Einstellbarkeit der Verschiebung ein erstes Anzeigeelement S1 bereitgestellt. Das erste Anzeigeelement S1 kann z.B. ein Skalenstrich oder aber eine Skala sein. Dieses erste Anzeigeelement S1 kann z.B. mittels eines zweiten Anzeigeelements S2 eingestellt werden. Das zweite Anzeigeelement S2 kann dann zum einen auf einem anderen, zum ersten Anzeigeelement S1 verschiebbaren Element angeordnet sein, oder aber auf einer Einstellhilfe EH.

Wenn z.B. das erste Anzeigeelement S1 auf dem ersten Verbindungselement VE1 angeordnet ist, kann das zweite Anzeigeelement S2 auf dem zweiten Verbindungselement VE2 und/oder der Einstellhilfe EH angeordnet sein. Ist hingegen das erste Anzeigeelement S1 auf dem zweiten Verbindungselement VE2 angeordnet, so kann das zweite Anzeigeelement S2 auf dem ersten Verbindungselement VE1 und/oder der Einstellhilfe EH angeordnet sein.

In einer weiteren Lösung bzw. Ausführung der Erfindung wird eine Einstellhilfe EH für eine Glashaltevorrichtung G gemäß der vorstehenden Beschreibung zur Verfügung gestellt.

Die Einstellhilfe EH weist eine Aufnahme auf, in die das erste Verbindungselement VE1 und das zweite Verbindungselement VE2 eingelegt werden können, wobei an der Einstellhilfe EH (mindestens) eine definierte Position A1, A2 für den zumindest teilweise umlaufenden Rahmen R der Glashaltevorrichtung G bereitgestellt wird.

Weiterhin wird ein zweites Anzeigeelement S2 bereitgestellt, wobei im Zusammenspiel mit einem ersten Anzeigeelement S1 an der Glashaltevorrichtung G eine definierte Position von dem ersten Verbindungselement VE1 zu dem zweiten Verbindungselement VE2 eingestellt werden kann.

In einer Weiterbildung der Erfindung weist die Einstellhilfe EH eine Fläche von mindestens der Größe des zumindest teilweise umlaufenden Rahmens R und des ersten Verbindungselements VE1 auf, wobei für den zumindest teilweise umlaufenden Rahmen R zumindest ein Anschlag A1, A2 gebildet ist.

In einer weiteren Ausbildung der Erfindung weist das zweite Anzeigeelement S2 eine Skala auf.

Gemäß einer weiteren Lösung bzw. Ausführung der Erfindung wird auch ein System aufweisend eine Glashaltevorrichtung G nach der vorherigen Beschreibung und eine Einstellhilfe EH nach der vorherigen Beschreibung gebildet, wobei das System weiterhin ein Berechnungsmittel aufweist, wobei das Berechnungsmittel basierend auf einem gewünschten Farbverlauf die Einstellposition für das erste Verbindungselement VE1 relativ zu dem zweiten Verbindungselement VE2 bestimmt, die mittels des ersten Anzeigeelements S1 relativ zu dem zweiten Anzeigeelement S2 eingestellt werden soll.

Das Berechnungsmittel kann beispielsweise ein Computer sein, der basierend auf Daten zum gewünschten Farbverlauf und räumlichen Parametern bezüglich der gewünschten Glasgeometrie in Bezug auf ein zu färbendes Linsenglas (aus dem in einem auf die Färbung nachfolgenden Schritt die gewünschte Form bei gewünschten optischen Eigenschaften herausgearbeitet wird) die einzustellenden Punkte ermittelt, sodass das zu färbende Linsenglas die richtige Tauchtiefe aufweist.

In einer Ausgestaltung der Erfindung ermittelt das Berechnungsmittel die Einstellposition basierend auf einem Wert, welcher bezogen ist auf die geometrische Mitte.

In den Ausführungsformen der Erfindung wird es ermöglicht, dass das Einrichten des Linsenglases in den Glashalter über eine für verschiedene Glasgrößen passende Einstellhilfe EH vornehmbar ist.

Mittels einer Skala S2 und einem Skalenstrich S1 (oder einem Skalenstrich S2 und einer Skala S1) kann dann ein zuvor berechnetes Maß eingestellt werden.

Für jedes Linsenglas kann abhängig von Glasdurchmesser und Färbeverlaufsparameter FVP ein Einstellwert ermittelt werden.

Ein solcher Einstellwert kann z.B. auf einem Auftrag für die Fertigung notiert sein.

Durch die Positionierung der Linsengläser im Färbebadbehälter entsprechend des vorab berechneten Einstellwerts ist ein effektiverer und effizienterer Färbeprozess möglich.

Das Fixieren der Linsengläser kann mittels einer Spannfeder realisiert werden. Dadurch wird der sichere Halt des Glases in der Haltefeder gewährleistet.

Die so vorbereiteten Glashaltevorrichtungen G werden danach in einen Warenträger T gehängt und so können unterschiedliche Durchmesser von Linsengläsern gleichzeitig gefärbt werden.

Der Warenträger T kann unterschiedlich ausgeformt sein, ebenso wie die Halteeinrichtung HE am zweiten Verbindungselement VE2 unterschiedlich ausgeformt sein kann.

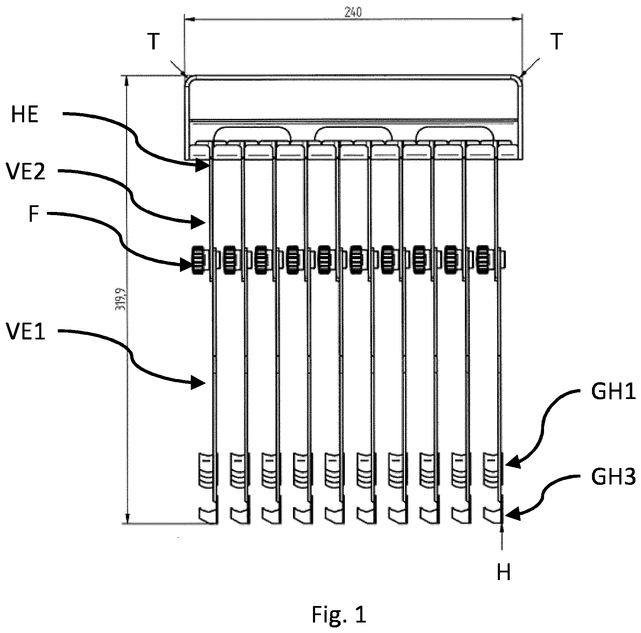

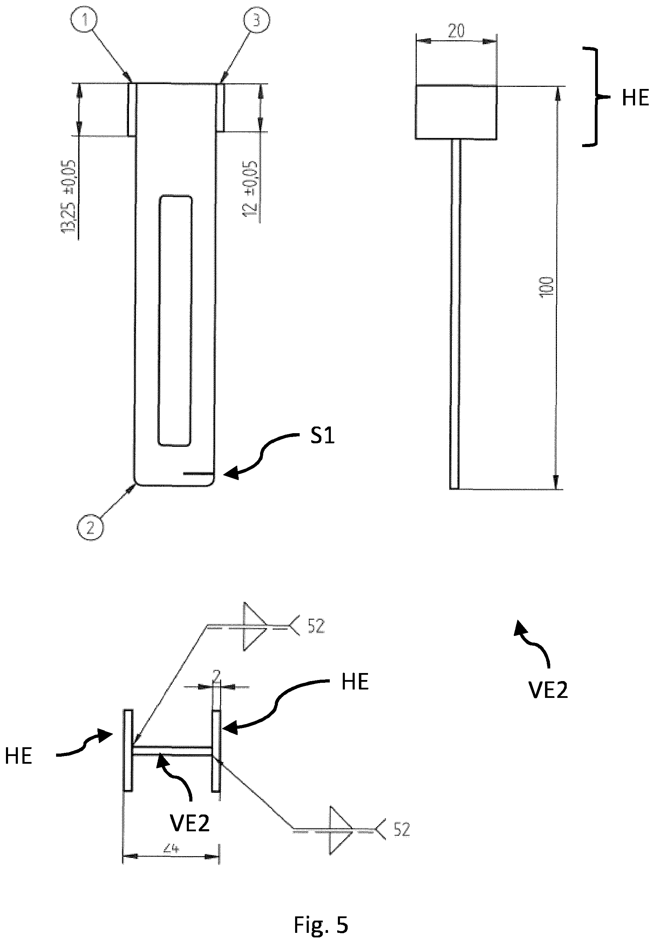

In den Figur 1, 2 und 4 ist z.B. eine Ausgestaltung des zweiten Verbindungselement VE2 bzw. der Halteeinrichtung HE gezeigt, die z.B. besonders einfach aus einem metallischen Werkstoff durch Biegen / Stanzen / Fräsen hergestellt werden kann. Dabei sind flügelartige Fortsätze durch Biegen so gestellt, dass sie nahezu senkrecht zum (gestanzten/gefrästen) Langloch stehen. Andere Herstellungsweisen sind z.B. ein Spritzgießen oder ein 3D-druckverfahren. In Figur 5 hingegen ist eine Ausformung gezeigt, die z.B. einfach als Spritzgussteil oder 3D-Druckteil hergestellt werden kann. Die Wahl der entsprechenden Materialien können z.B. durch die Art des Bades bzw. der darin enthaltenen Stoffe, z.B. Lösungsmittel, beschränkt sein. Je nach Ausgestaltung der Halteeinrichtung kann eine Neigung zur Schwingung eine Glashaltevorrichtung G besser unterdrückt werden. Insofern wird bei einer Ausgestaltung gemäß Figur 5 eine geringere Schwingungsneigung auftreten, da diese mehr Aufliegefläche/ Mehrpunktauflage als die Ausgestaltung der Figur 4 aufweist. Offensichtlich können das erste Verbindungselement VE1 als auch das zweite Verbindungselement VE2 aus unterschiedlichen Materialien hergestellt sein.

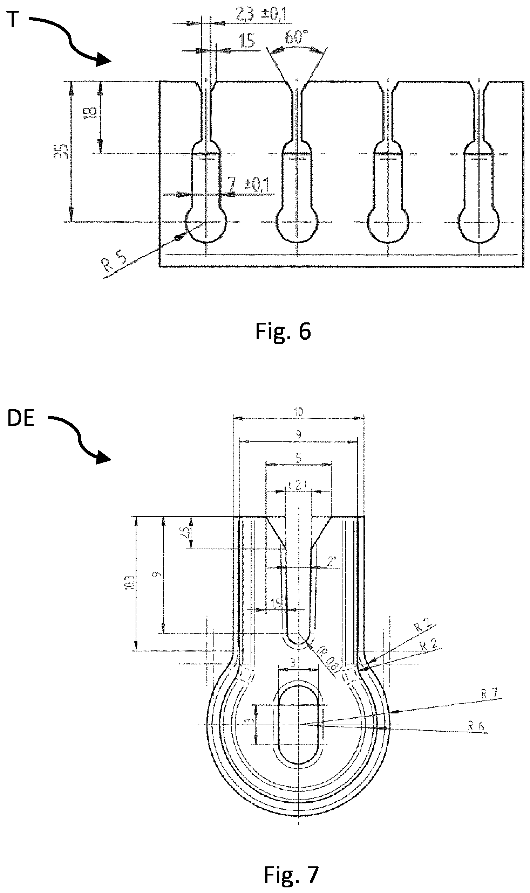

Der in Figur 1 angedeutete Warenträger kann für die einzelnen Halteeinrichtungen HE verschiedener zu färbender Gläser Aufnahmen aufweisen. Ein beispielhafte Darstellung solcher Aufnahmen ist in Figur 6 in einem Detail gezeigt, wobei die Darstellung annimmt, dass der in Figur 6 dargestellte Abschnitt im Bild der Figur 1 senkrecht aus der Zeichenebene steht, sodass in die Schlitze mit der trichterförmigen Öffnung je eine Halteeinrichtung HE aufgenommen werden kann.

Zur weiteren Stabilisierung kann vorgesehen sein, dass in entsprechende Öffnungen im Warenträger T zur Aufnahme der Halteeinrichtungen HE weiterhin ein dämpfendes Element DE eingelegt wird.

Dieses kann z.B. aus einem Duromer oder aus Silikon gefertigt sein und eine eventuelle Schwingung dämpfen. Ohne Beschränkung der Allgemeinheit kann dieses dämpfende Element DE als Spritzgussteil oder mittels 3D-Druck hergestellt werden.

Eine exakte Positionierung der Linsengläser wird durch ein vorgegebenes Einstellmaß erreicht und nicht mehr näherungsweise durch eine visuelle Abschätzung des Mitarbeiters.

Jedes Linsenglas kann einzeln in einen Halter aufgenommen werden.

Eine genauere Fertigung von Graduellen Gläsern kann damit realisiert werden. Ein weiterer Vorteil liegt darin, dass sich die Rüstzeiten bei der Bestückung der Färbekörbe verkürzen.

Somit können alle Arten von Gläsern, also insbesondere Kunststoffgläser als auch mineralische Gläser, kostengünstig und mit den gewünschten Eigenschaften gefärbt werden.

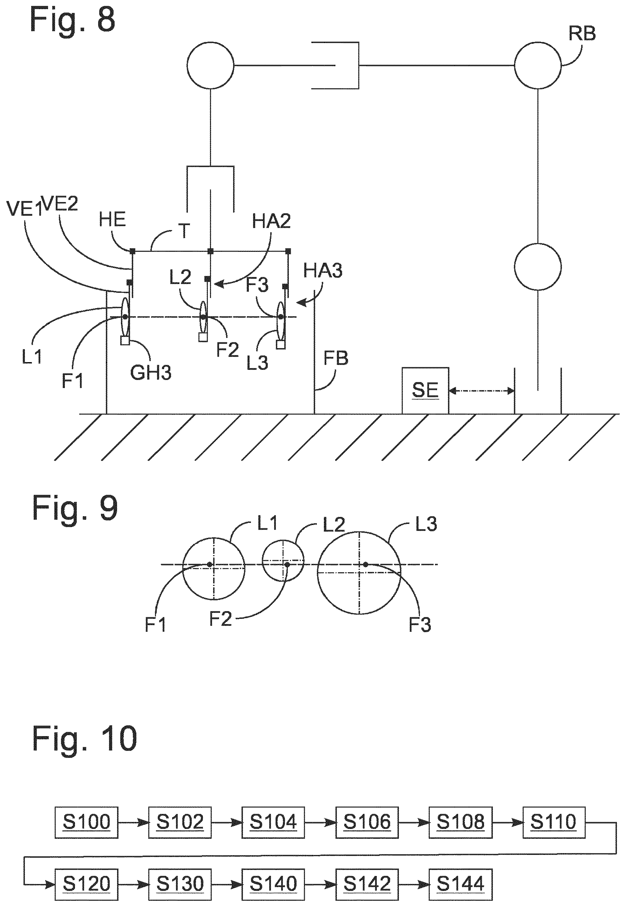

Fig. 8 zeigt einen mit Glashaltevorrichtungen bestückten Warenträger T einer Färbeanlage gemäß Ausführungsformen der Erfindung. Exemplarisch sind drei Glashaltevorrichtungen dargestellt, die drei rohrunde Linsen-, insbesondere Brillengläser L1 - L3 halten.

Die drei Glashaltevorrichtungen sind gleichartig und entsprechen den vorstehend beschriebenen Ausführungsformen der Erfindung. Für die in Fig. 8 linke Glashaltevorrichtung sind das erste und zweite Verbindungselement VE1, VE2, die Halteeinrichtung HE sowie das dritte Glashalteelement GH3 angedeutet, für die beiden anderen Glashaltevorrichtungen nur die Haltearme HA2, HA3.

Außerdem ist ein Färbebadbehälter FB und eine Hebevorrichtung in Form eines Roboterarms RB mit Steuer(ungs)einrichtung SE angedeutet.

Zur Erläuterung sind zudem für die drei Gläser L1-L3 Färbeverlaufspunkte F1, F2 bzw. F3 angedeutet.

Die Länge der Haltearme VE1+VE2, HA2, HA3 ist jeweils so eingestellt, dass diese drei Färbeverlaufspunkte F1 - F3 auf einer gemeinsamen Achse liegen, die in Fig. 8 gestrichelt angedeutet ist.

An diesem exemplarischen Beispiel wird klar, dass die Gläser L1 und L2 trotz ihrer unterschiedlichen Durchmesser gemeinsam durch Eintauchen in das und Herausheben aus dem Färbebadbehälter FB mittels oszillierender Bewegung des Roboterarms RB gleichartig graduell gefärbt werden können, während bei einer herkömmlichen Lagerung, bei der die untersten Punkte der Gläser auf einer gemeinsamen Achse liegen, die beiden Gläser unterschiedlich gefärbt würden.

Das rechte Glas L3 verdeutlicht, dass umgekehrt auch bei Gläsern gleichen Durchmessers ein anderer Färbeverlauf realisiert werden kann, beispielsweise aufgrund unterschiedlicher Lagen der formgerandeten Brillengläser im jeweiligen rohrunden Brillenglas oder dergleichen.

Fig. 9 zeigt zur Erläuterung die drei Gläser L1-L3 einer Abwandlung der Fig. 8 nebeneinander in Draufsicht mit jeweils eingezeichnetem Färbeverlaufspunkt F1, F2 bzw. F3. Bis auf die Durchmesser der Gläser und die Lagen der Färbeverlaufspunkte entspricht die Abwandlung der Fig. 8. Man erkennt, dass bei einer herkömmlichen Lagerung der Gläser an ihrem jeweils untersten Punkt und nicht verstellten Haltearm(läng)en die gewünschten Färbeverlaufspunkte nicht gemeinsam realisiert werden könnten.

Fig. 10 veranschaulicht ein Verfahren zum graduellen Färben von Linsengläsern gemäß Ausführungsformen der Erfindung, wie es insbesondere mithilfe der Färbeanlage der Fig. 8 durchgeführt werden kann.

Nacheinander werden die folgenden Schritte ausgeführt:
Bereitstellen (Schritt S100) des zu färbenden Brillenglases als rohrundes Brillenglas;
Einlesen (S102) von Brillenglasbestelldaten wie beispielsweise Durchmesser des rohrunden Brillenglases, optischer Wirkung, Daten der geometrischen, finalen Form des Brillenglases nach erfolgter Formrandung, optional auch bei der Bestellung übermittelter Daten wie einer kundenseitigen Vorgabe des Färbeverlaufpunktes;
Bestimmen (S104) des Färbeverlaufspunktes, insbesondere wahlweise das Auslesen eines empirischen Wertes für den Färbeverlaufspunkt anhand des Durchmessers des rohrunden Brillenglases, wahlweise das Berechnen des Färbeverlaufspunktes als geometrischer Mittelpunkt des Kastenmaßes oder wahlweise die Berechnung des Färbeverlaufspunktes anhand übermittelter Brillenglasbestelldaten;
Einlegen (S106) des zu färbenden, rohrunden Brillenglases in eine Glashalte- bzw. Färbevorrichtung;
Einstellen (S108) der Länge des Haltearms der Färbevorrichtung;
Bestücken (S110) eines Waren- bzw. Färbeträgers T, wobei die Glashalte- bzw. Färbevorrichtung mit ihrem Aufnahmeelement bzw. ihrer Halteeinrichtung HE an dem Waren- bzw. Färbeträger befestigt wird;
optional Wiederholen der Schritte S100 bis S110, um weitere zu färbende, rohrunde Brillengläser auf Färbe- bzw. Glashaltevorrichtungen anzuordnen und diese Vorrichtungen am Träger zu befestigen;
Beladen (S120) der Färbeanlage, wobei der Waren- bzw. Färbeträger T, aufweisend mindestens eine Glashalte- bzw. Färbevorrichtung G, bevorzug aufweisend eine Mehrzahl an Glashalte- bzw. Färbevorrichtungen am Roboterarm RB befestigt wird, in einer Ausführung, indem der Roboterarm den Waren- bzw. Färbeträger T greift;
Durchführen (S130) eines Färbeprogramms an der Steuereinheit SE der Färbeanlage zum Erhalt von graduell gefärbten Brillengläsern;
Entladen (S140) der Färbeanlage des Färbesystems, wobei der Waren- bzw. Färbeträger nach erfolgtem Färben von dem Roboterarm RB der Färbeanlage abgenommen wird;
Entnehmen (S142) des Waren- bzw. Färbeträgers, wobei die Färbe- bzw. Glashaltevorrichtung G bzw. die mehreren Färbe- bzw. Glashaltevorrichtungen vom Färbe- bzw. Warenträger entnommen werden; und
Entnehmen (S144) der graduell gefärbten Brillengläser aus den jeweiligen Färbe- bzw. Glashaltevorrichtungen.

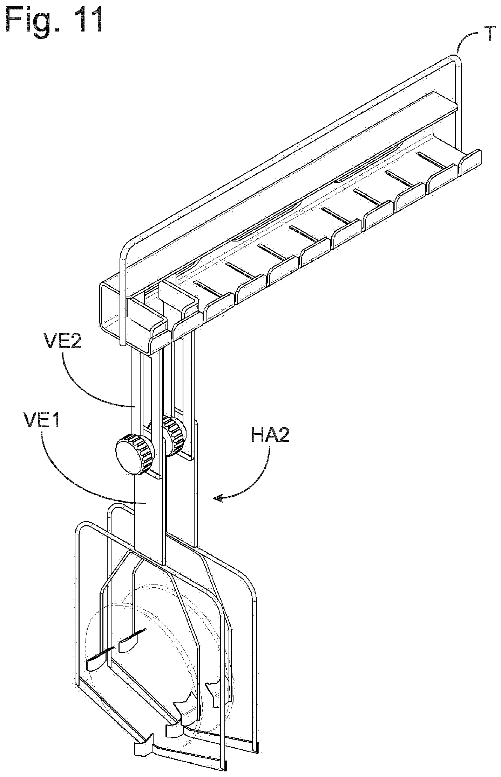

Fig. 11 zeigt den Warenträger T der Fig. 8 in perspektivischer Ansicht exemplarisch mit zwei der drei Glashaltevorrichtungen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt**.**

### Bezugszeichenliste

- G: Glashaltevorrichtung
- GH1: erste (elastische) Glashalteeinrichtung
- GH2: zweite (elastische) Glashalteeinrichtung
- R: zumindest teilweise umlaufender Rahmen
- GH3: drittes Glasrandhalteelement
- VE1: erstes Verbindungselement
- VE2: zweites Verbindungselement
- HE: Halteeinrichtung
- T: Warenträger
- F: Schraubverbindung
- S1: erstes Anzeigeelement
- EH: Einstellhilfe
- A1, A2: Anschlag
- S2: zweites Anzeigeelement
- DE: dämpfendes Element
- L1: Linsen-/Brillenglas
- L2: Linsen-/Brillenglas
- L3: Linsen-/Brillenglas
- F1: Färbeverlaufspunkt
- F2: Färbeverlaufspunkt
- F3: Färbeverlaufspunkt
- HA2: Haltearm
- HA3: Haltearm
- FB: Färbebadbehälter
- RB: Roboterarm (Hebevorrichtung)
- SE: Steuer(ungs)einrichtung

## Patentansprüche

1. Verfahren zum graduellen Färben von Linsengläsern, insbesondere Brillengläsern, mithilfe einer Färbeanlage, wobei die Färbeanlage aufweist:
- wenigstens einen Färbebadbehälter (FB);
- wenigstens einen Warenträger (T);
- wenigstens eine erste Glashaltevorrichtung (G) zum Halten eines ersten Linsenglases (L1), insbesondere Brillenglases, an dessen Rand während einer Färbung in dem Färbebadbehälter, wobei die erste Glashaltevorrichtung eine erste Glasrandhalterung zu einem Halten des ersten Linsenglases an einem Rand des ersten Linsenglases während der Färbung aufweist, die an einem ersten Verbindungselement (VE1) befestigt ist, wobei verschieb- und fixierbar relativ zu diesem ersten Verbindungselement ein zweites Verbindungselement (VE2) angeordnet ist, das eine erste Halteeinrichtung (HE) für den Warenträger (T) in dem Färbebadbehälter aufweist; und
- eine Hebevorrichtung (RB) zum Heben und Senken des an der Hebevorrichtung befestigten Warenträgers zum Eintauchen und Herausheben des durch die erste Glasrandhalterung der mit der ersten Halteeinrichtung an dem Warenträger gehaltenen ersten Glashaltevorrichtung gehaltenen ersten Linsenglases in das bzw. aus dem Färbebadbehälter;
wobei das Verfahren die folgenden Schritte aufweist:
- Anordnen (S106) des zu färbenden, insbesondere rohrunden, ersten Linsenglases an der ersten Glashaltevorrichtung;
- Einstellen (S108) einer Länge eines durch das erste und zweite Verbindungselement sowie die erste Halteeinrichtung und erste Glasrandhalterung gebildeten Haltearms der ersten Glashaltevorrichtung durch Fixieren und gegebenenfalls Verschieben des ersten und zweiten Verbindungselements relativ zueinander;
- Durchführen (S130) eines Färbeprozesses zum Erhalt von graduell gefärbten Linsengläsern, insbesondere Brillengläsern, wobei der Färbeprozess ein Eintauchen und Herausheben des durch die erste Glasrandhalterung der mit der ersten Halteeinrichtung an dem Warenträger gehaltenen ersten Glashaltevorrichtung gehaltenen ersten Linsenglases in den bzw. aus dem Färbebadbehälter mithilfe der hierzu gesteuerten Hebevorrichtung umfasst; und
- Entnehmen (S144) des graduell gefärbten ersten Linsenglases aus der ersten Glashaltevorrichtung;
**dadurch gekennzeichnet, dass** die Länge des Haltearms mittels einer Einstellhilfe nach einem der Ansprüche 11 bis 12 eingestellt wird und/oder die erste Glashaltevorrichtung eine Glashaltevorrichtung nach einem der Ansprüche 7 bis 10 ist.

2. Verfahren nach Anspruch 1, **dadurch gekennzeichnet,**
- **dass** die Färbeanlage wenigstens eine zweite Glashaltevorrichtung zum Halten eines zweiten Linsenglases (L2; L3), insbesondere Brillenglases, an dessen Rand während einer Färbung in dem Färbebadbehälter aufweist,
wobei die zweite Glashaltevorrichtung eine zweite Glasrandhalterung zu einem Halten des zweiten Linsenglases an einem Rand des zweiten Linsenglases während der Färbung aufweist, die an einem ersten Verbindungselement befestigt ist, wobei verschieb- und fixierbar relativ zu dem ersten Verbindungselement ein zweites Verbindungselement angeordnet ist, das eine zweite Halteeinrichtung für den Warenträger in dem Färbebadbehälter aufweist;
- **dass** die Hebevorrichtung und der Warenträger zum Heben und Senken des an der Hebevorrichtung befestigten Warenträgers zum gleichzeitigen Eintauchen und Herausheben
- des durch die erste Glasrandhalterung der mit der ersten Halteeinrichtung an dem Warenträger gehaltenen ersten Glashaltevorrichtung gehaltenen ersten Linsenglases und
- des durch die zweite Glasrandhalterung der mit der zweiten Halteeinrichtung an dem Warenträger gehaltenen zweiten Glashaltevorrichtung gehaltenen zweiten Linsenglases
in das bzw. aus dem Färbebadbehälter eingerichtet sind; und
- **dass** das Verfahren die folgenden Schritte aufweist:
- Anordnen (S106) des zu färbenden, insbesondere rohrunden, zweiten Linsenglases an der zweiten Glashaltevorrichtung;
- Einstellen (S108) einer Länge eines durch das erste und zweite Verbindungselement der zweiten Glashaltevorrichtung sowie die zweite Halteeinrichtung und zweite Glasrandhalterung gebildeten Haltearms (HA2, HA3) der zweiten Glashaltevorrichtung durch Fixieren und gegebenenfalls Verschieben dieses ersten und zweiten Verbindungselements relativ zueinander;
- Durchführen (S130) des Färbeprozesses zum Erhalt von graduell gefärbten Linsengläsern, insbesondere Brillengläsern, wobei der Färbeprozess ein gleichzeitiges Eintauchen und Herausheben
- des durch die erste Glasrandhalterung der mit der ersten Halteeinrichtung an dem Warenträger gehaltenen ersten Glashaltevorrichtung gehaltenen ersten Linsenglases und
- des durch die zweite Glasrandhalterung der mit der zweiten Halteeinrichtung an dem Warenträger gehaltenen zweiten Glashaltevorrichtung gehaltenen zweiten Linsenglases
in den bzw. aus dem Färbebadbehälter mithilfe der hierzu gesteuerten Hebevorrichtung umfasst; und
- Entnehmen (S144) des graduell gefärbten zweiten Linsenglases aus der zweiten Glashaltevorrichtung.

3. Verfahren nach einem der vorhergehenden Ansprüche, **dadurch gekennzeichnet, dass** es wenigstens einen der folgenden Schritte umfasst:
- Bereitstellen (S100) des zu färbenden ersten und/oder zweiten Linsenglases als rohrundes Linsenglas, insbesondere Brillenglas;
- Einlesen (S102) von Linsenglasbestelldaten für das zu färbende erste und/oder zweite Linsenglas, insbesondere eines Durchmessers des rohrunden Linsenglases, einer optischen Wirkung, einer geometrischen, insbesondere finalen, Form des Linsenglases nach erfolgter Formrandung und/oder einer, insbesondere kundenseitigen, Vorgabe für einen Färbeverlauf;
- Ermitteln (S104) eines Färbeverlaufsparameters des zu färbenden ersten und/oder zweiten Linsenglases, insbesondere
- Auslesen eines empirischen Wertes für den Färbeverlaufsparameter auf Basis der eingelesenen Linsenglasbestelldaten, insbesondere des Durchmessers des rohrunden Linsenglases;
- Berechnen des Färbeverlaufsparameters als geometrischer Mittelpunkt des Kastenmaßes; oder
- Berechnen des Färbeverlaufsparameters anhand übermittelter Linsenglasbestelldaten;
- individuelles, linsenglasspezifisches Einstellen (S108) der Länge des Haltearms der ersten und/oder zweiten Glashaltevorrichtung, insbesondere auf Basis des ermittelten Färbeverlaufsparameters;
- Bestücken (S110) des Warenträgers mit der ersten und/oder zweiten Glashaltevorrichtung;
- Befestigen (S120) des, insbesondere mit der ersten und/oder zweiten Glashaltevorrichtung bestückten, Warenträgers an der Hebevorrichtung;
- Steuern der Hebevorrichtung zum Durchführen des Färbeprozesses auf Basis eines Färbeprogramms;
- Lösen (S140) des Warenträgers von der Hebevorrichtung nach erfolgtem Färben; und/oder
- Lösen (S142) der ersten und/oder zweiten Glashaltevorrichtung von dem Warenträger.

4. Verfahren nach einem der vorhergehenden Ansprüche, **dadurch gekennzeichnet, dass** die Hebevorrichtung wenigstens einen Roboterarm (RB) aufweist und/oder die erste und/oder zweite Glashaltevorrichtung eine Glashaltevorrichtung nach einem der Ansprüche 7 bis 10 ist.

5. Färbeanlage zum graduellen Färben von Linsengläsern, insbesondere Brillengläsern, wobei die Färbeanlage zur Durchführung eines Verfahrens nach einem der vorhergehenden Ansprüche eingerichtet ist und/oder aufweist:
- wenigstens einen Färbebadbehälter (FB);
- wenigstens einen Warenträger (T);
- wenigstens eine erste Glashaltevorrichtung (G) zum Halten eines ersten Linsenglases (L1), insbesondere Brillenglases, an dessen Rand während einer Färbung in dem Färbebadbehälter, wobei die erste Glashaltevorrichtung eine erste Glasrandhalterung zu einem Halten des ersten Linsenglases an einem Rand des ersten Linsenglases während der Färbung aufweist, die an einem ersten Verbindungselement (VE1) befestigt ist, wobei verschieb- und fixierbar relativ zu dem ersten Verbindungselement ein zweites Verbindungselement (VE2) angeordnet ist, das eine erste Halteeinrichtung (HE) für den Warenträger (T) in dem Färbebadbehälter aufweist; und
- eine Hebevorrichtung (RB) zum Heben und Senken des an der Hebevorrichtung befestigten Warenträgers zum Eintauchen und Herausheben des durch die erste Glasrandhalterung der mit der ersten Halteeinrichtung an dem Warenträger gehaltenen ersten Glashaltevorrichtung gehaltenen ersten Linsenglases in das bzw. aus dem Färbebadbehälter;
wobei die erste Glashaltevorrichtung eine Glashaltevorrichtung nach einem der Ansprüche 7 bis 10 ist.

6. Färbeanlage nach Anspruch 5, **dadurch gekennzeichnet, dass** sie ein System nach einem der Ansprüche 13 bis 15 aufweist.

7. Glashaltevorrichtung (G) zum Halten eines Linsenglases, insbesondere Brillenglases, an dessen Rand, während einer Färbung in einem Färbebad, aufweisend eine Glasrandhalterung zu einem Halten des Linsenglases an einem Rand des Linsenglases während der Färbung,
wobei die Glasrandhalterung an einem ersten Verbindungselement (VE1) befestigt ist,
wobei verschieb- und fixierbar relativ zu dem ersten Verbindungselement ein zweites Verbindungselement (VE2) angeordnet ist, das eine Halteeinrichtung (HE) für einen Warenträger (T) in einem Färbebadbehälter aufweist;
**dadurch gekennzeichnet, dass**
die Glashaltevorrichtung einen steuerbaren Aktuator zum Verschieben und/oder Fixieren des ersten und zweites Verbindungselements relativ zueinander aufweist und/oder zur Einstellbarkeit der Verschiebung ein erstes Anzeigeelement (S1) bereitgestellt wird.

8. Glashaltevorrichtung (G) nach Anspruch 7, **dadurch gekennzeichnet, dass** die Glasrandhalterung
- eine erste, insbesondere elastische, Glashalteeinrichtung (GH1) mit einem ersten Glasrandhalteelement, zu einem Halten des Linsenglases an einem Rand des Linsenglases, an einer ersten Randseite, während der Färbung; und/oder
- eine zweite, insbesondere elastische, Glashalteeinrichtung (GH2) mit einem zweiten Glasrandhalteelement, zum Halten des Linsenglases an dem Rand des Linsenglases, an einer zweiten Randseite, während der Färbung; und/oder
- einen zumindest teilweise umlaufenden Rahmen (R) mit einem, insbesondere dritten, Glasrandhalteelement (GH3), zum Halten des Linsenglases an dem Rand des Linsenglases, an einer, insbesondere dritten und/oder unteren, Randseite, während der Färbung,
aufweist.

9. Glashaltevorrichtung (G) nach einem der vorhergehenden Ansprüche 7 bis 8,
**dadurch gekennzeichnet, dass** die erste Randseite und die zweite Randseite jeweils an einer linken Seite beziehungsweise an einer rechten Seite des Randes des Linsenglases angeordnet sind und/oder die dritte Randseite an einer unteren Seite des Randes des Linsenglases angeordnet ist und/oder das erste Verbindungselement (VE1) und das zweite Verbindungselement (VE2) mittels einer Schraubverbindung (F) fixiert werden können.

10. Glashaltevorrichtung (G) nach einem der vorhergehenden Ansprüche 7 bis 9,
**dadurch gekennzeichnet, dass** die Verschiebbarkeit durch eine Zwangsbahn beschränkt ist, die in dem ersten Verbindungselement (VE1) und/oder dem zweiten Verbindungselement (VE2) bereitgestellt ist.

11. Einstellhilfe (EH) für eine Glashaltevorrichtung (G), insbesondere nach einem der vorhergehenden Ansprüche 7 bis 10,
wobei die Glashaltevorrichtung ist: eine Glashaltevorrichtung zum Halten eines Linsenglases, insbesondere Brillenglases, an dessen Rand, während einer Färbung in einem Färbebad, aufweisend eine Glasrandhalterung zu einem Halten des Linsenglases an einem Rand des Linsenglases während der Färbung, wobei die Glasrandhalterung an einem ersten Verbindungselement (VE1) befestigt ist, wobei verschieb- und fixierbar relativ zu dem ersten Verbindungselement ein zweites Verbindungselement (VE2) angeordnet ist, das eine Halteeinrichtung (HE) für einen Warenträger (T) in einem Färbebadbehälter aufweist;
wobei die Einstellhilfe eine Aufnahme aufweist, in die das erste Verbindungselement (VE1) und das zweite Verbindungselement (VE2) eingelegt werden können, wobei weiterhin ein zweites Anzeigeelement (S2) bereitgestellt wird, wobei im Zusammenspiel mit einem ersten Anzeigeelement (S1) an der Glashaltevorrichtung eine definierte Position von dem ersten Verbindungselement (VE1) zu dem zweiten Verbindungselement (VE2) eingestellt werden kann.

12. Einstellhilfe (EH) nach Anspruch 11, **dadurch gekennzeichnet,**
- **dass** an der Einstellhilfe (EH) eine definierte Position (A1, A2) für den zumindest teilweise umlaufenden Rahmen (R) bereitgestellt wird; und/oder
- **dass** die Einstellhilfe (EH) eine Fläche von mindestens der Größe des zumindest teilweise umlaufenden Rahmens (R) und des ersten Verbindungselements (VE1) aufweist, wobei für den zumindest teilweise umlaufenden Rahmen (R) ein Anschlag (A1, A2) gebildet ist; und/oder
- **dass** das zweite Anzeigeelement (S2) eine Skala aufweist.

13. System, das eine erste Glashaltevorrichtung (G) aufweist, wobei:
die erste Glashaltevorrichtung ist: eine Glashaltevorrichtung zum Halten eines Linsenglases, insbesondere Brillenglases, an dessen Rand, während einer Färbung in einem Färbebad, aufweisend eine Glasrandhalterung zu einem Halten des Linsenglases an einem Rand des Linsenglases während der Färbung, wobei die Glasrandhalterung an einem ersten Verbindungselement (VE1) befestigt ist, wobei verschieb- und fixierbar relativ zu dem ersten Verbindungselement ein zweites Verbindungselement (VE2) angeordnet ist, das eine Halteeinrichtung (HE) für einen Warenträger (T) in einem Färbebadbehälter aufweist;
wobei die erste Glashaltevorrichtung eine Glashaltevorrichtung nach einem der Ansprüche 7 bis 10 ist und/oder das System wenigstens einen Warenträger (T) und wenigstens eine zweite Glashaltevorrichtung nach einem der Ansprüche 7 bis 10 zum gleichzeitigen Färben eines ersten Linsenglases (L1), insbesondere Brillenglases, welches durch die Glasrandhalterung der ersten Glashaltevorrichtung gehalten ist, welche mit ihrer Halteeinrichtung an dem Warenträger gehalten ist, und eines zweiten Linsenglases (L2; L3), insbesondere Brillenglases, welches durch die Glasrandhalterung der zweiten Glashaltevorrichtung gehalten ist, welche mit ihrer Halteeinrichtung an dem Warenträger gehalten ist, aufweist.

14. System nach Anspruch 13, **dadurch gekennzeichnet, dass** das System weiterhin eine Einstellhilfe (EH) nach einem der Ansprüche 11 bis 12 und ein Berechnungsmittel aufweist, wobei das Berechnungsmittel basierend auf einem gewünschten Farbverlauf die Einstellposition für das erste Verbindungselement (VE1) relativ zu dem zweiten Verbindungselement (VE2) bestimmt, die mittels des ersten Anzeigeelements (S1) relativ zu dem zweiten Anzeigeelement (S2) eingestellt werden soll.

15. System nach Anspruch 14, **dadurch gekennzeichnet, dass** das Berechnungsmittel die Einstellposition basierend auf einem Wert, welcher bezogen ist auf die geometrische Mitte, ermittelt.

## Claims

1. A method for gradually tinting lens glasses, in particular eyeglass lenses, using a tinting system, wherein the tinting system comprises:
- at least one tinting bath container (FB);
- at least one workpiece carrier (T);
- at least one first lens-holding device (G) for holding a first lens glass (L1), in particular an eyeglass lens, by its edge during tinting in the tinting bath container, wherein the first lens-holding device comprises a first lens-edge holder for holding the first lens glass by an edge of the first lens glass during tinting, which is attached to a first connecting element (VE1), wherein a second connecting element (VE2) is arranged such that it can be moved and fixed relative to this first connecting element, and which comprises a first holding device (HE) for the workpiece carrier (T) in the tinting bath container; and
- a lifting device (RB) for raising and lowering the workpiece carrier attached to the lifting device in order to immerse and lift the first lens glass held by the first glass edge holder of the first glass-holding device, which is in turn held on the workpiece carrier by the first holding device into and out of the tinting bath container, respectively;
wherein the method comprises the following steps:
- positioning (S106) the first lens glass, in particular a tubular one, to be tinted on the first glass-holding device;
- adjusting (S108) a length of a holding arm of the first glass-holding device formed by the first and second connecting elements as well as the first holding device and the first glass edge holder by fixing and, if necessary, moving the first and second connecting elements relative to one another;
- performing (S130) a tinting process to produce gradually tinted lens glasses, in particular eyeglass lenses, wherein the tinting process comprises immersing and lifting the first lens glass held by the first lens-edge holder of the first lens-holding device which is held on the workpiece carrier by the first holding device into and out of the tinting bath container, respectively, using the lifting device controlled for this purpose; and
- removing (S144) the gradually tinted first lens glass from the first lens-holding device;
wherein the length of the holding arm is adjusted by means of an adjustment aid according to one of claims 11 to 12, and/or wherein the first lens-holding device is a lens-holding device according to one of claims 7 to 10.

2. The method according to claim 1, **characterized in**
- **that** the tinting system comprises at least one second lens-holding device for holding a second lens glass (L2; L3), in particular a eyeglass lens, by its edge during tinting in the tinting bath container,
wherein the second glass-holding device comprises a second glass-edge holder for holding the second lens glass by an edge of the second lens glass during tinting, which is attached to a first connecting element, wherein a second connecting element which is movable and lockable relative to the first connecting element, which comprises a second connecting element comprising a second holding device for the workpiece carrier in the tinting bath container;
- **that** the lifting device and the workpiece carrier are configured to raise and lower the workpiece carrier attached to the lifting device for the simultaneous immersion and removal of
- the first lens glass held by the first glass edge holder of the first glass holding device which is secured to the workpiece carrier by the first holding means and
- the second lens glass held by the second glass edge holder of the second glass holding device which is secured to the workpiece carrier by the second holding means
into and out of the tinting bath container, respectively; and
- **that** the method comprises the following steps:
- positioning (S106) the second lens glass, in particular the tubular one, to be tinted on the second glass-holding device;
- adjusting (S108) a length of a holding arm (HA2, HA3) of the second glass-holding device formed by the first and second connecting elements of the second glass-holding device, as well as the second holding device and the second glass edge holder by fixing and, if necessary, moving these first and second connecting elements relative to one another;
- performing (S130) the tinting process to obtain gradually tinted lens glasses, in particular eyeglass lenses, wherein the tinting process involves the simultaneous immersion and removal of
- the first lens glass held by the first lens edge holder of the first lens-holding device which is secured to the product carrier by the first holding device, and
- the second lens glass held by the second lens edge holder of the second lens-holding device, which is held on the product carrier by the second holding device
into and out of the tinting bath container, respectively, using the lifting device controlled for this purpose; and
- removing (S144) the gradually tinted second lens glass from the second glass-holding device.

3. The method according to any one of the preceding claims, **characterized in that** it comprises at least one of the following steps:
- providing (S100) the first and/or second lens glass to be tinted in the form of a tubular lens glass, in particular an eyeglass lens;
- reading (S102) lens glass order data for the first and/or second lens glass to be tinted, in particular the diameter of the tubular lens, an optical value, a geometric, in particular final, shape of the lens glass after edging, and/or a specification, in particular a customer specification, for a tinting gradient;
- determining (S104) a tint gradient parameter for the first and/or second lens glass to be tinted, in particular
- retrieving an empirical value for the tint gradient parameter based on the imported lens glass order data, in particular the diameter of the tubular lens glass;
- calculating the tint gradient parameter as the geometric center of the frame dimensions; or
- calculating the tint gradient parameter based on transmitted lens glass order data;
- individually adjusting (S108) the length of the holding arm of the first and/or second glass-holding device to suit the specific lens glass, in particular based on the determined tinting profile parameter;
- loading (S110) the workpiece carrier with the first and/or second lens-holding device;
- securing (S120) the workpiece carrier equipped, in particular, with the first and/or second lens-holding device to the lifting device;
- controlling the lifting device to carry out the tinting process based on a tinting program;
- detaching (S140) the product carrier from the lifting device after tinting is complete; and/or
- detaching (S142) the first and/or second glass-holding device from the product carrier.

4. The method according to any one of the preceding claims, **characterized in that** the lifting device comprises at least one robotic arm (RB) and/or the first and/or second lens-holding device is a lens-holding device according to any one of claims 7 to 10.

5. A tinting system for the gradual tinting of lens glasses, in particular eyeglass lenses, wherein the tinting system is configured to carry out a method according to one of the preceding claims and/or comprises:
- at least one tinting bath container (FB);
- at least one workpiece carrier (T);
- at least one first lens-holding device (G) for holding a first lens glass (L1), in particular an eyeglass lens, by its edge during tinting in the tinting bath container, wherein the first lens-holding device comprises a first lens-edge holder for holding the first lens glass by an edge of the first lens glass during tinting, which is attached to a first connecting element (VE1), wherein a second connecting element (VE2) is arranged such that it can be slid and locked in place relative to the first connecting element, and which comprises a first holding device (HE) for the workpiece carrier (T) in the tinting bath container; and
- a lifting device (RB) for raising and lowering the product carrier attached to the lifting device in order to immerse and lift out of the tinting bath container the first lens glass held by the first glass edge holder of the first glass holding device, which is held on the product carrier by the first holding device;
wherein the first lens-holding device is a lens-holding device according to one of claims 7 to 10.

6. The tinting apparatus according to claim 5, **characterized in that** it comprises a system according to one of claims 13 to 15.

7. A lens-holding device (G) for holding a lens glass, in particular an eyeglass lens, by its edge during tinting in a tinting bath, comprising a lens-edge holder for holding the lens glass by one of its edges during tinting,
wherein the lens-edge holder is secured to a first connecting element (VE1),
wherein a second connecting element (VE2) is arranged such that it can be moved and fixed relative to the first connecting element, and comprises a holding device (HE) for a workpiece carrier (T) in a tinting bath container;
**characterized in that** the glass-holding device comprises a controllable actuator for moving and/or locking the first and second connecting elements relative to one another and/or a first display element (S1) is provided for adjusting the displacement.

8. The lens-holding device (G) according to claim 7, **characterized in that** the glass edge holder comprises:
- a first, in particular an elastic, glass-holding device (GH1) with a first glass edge-holding element, for holding the lens glass at an edge of the lens glass, on a first edge side, during tinting; and/or
- a second, in particular an elastic, lens-holding device (GH2) with a second lens-edge holding element, for holding the lens glass at the edge of the lens glass on a second edge side during tinting; and/or
- an at least partially circumferential frame (R) with a, in particular a third lens edge holding element (GH3) for holding the lens glass at the edge of the lens glass on a, in particular a third and/or lower edge side during tinting.

9. The lens-holding device (G) according to any one of the preceding claims 7 to 8, **characterized in that** the first edge side and the second edge side are each arranged on a left side and a right side, respectively, of the edge of the lens glass, and/or the third edge side is arranged on a lower side of the edge of the lens glass, and/or the first connecting element (VE1) and the second connecting element (VE2) can be secured by means of a screw connection (F).

10. The lens-holding device (G) according to any one of the preceding claims 7 to 9, **characterized in that** the ability to slide is limited by a guide path provided in the first connecting element (VE1) and/or the second connecting element (VE2).

11. An adjustment aid (EH) for a glass-holding device (G), in particular according to any one of the preceding claims 7 to 10,
wherein the glass-holding device is: a glass-holding device for holding a lens glass, in particular an eyeglass lens, by its edge during tinting in a tinting bath, comprising a lens-edge holder for holding the lens glass by one of its edges during tinting, wherein the lens-edge holder is attached to a first connecting element (VE1), wherein a second connecting element (VE2) is arranged such that it can be moved and locked in place relative to the first connecting element, and which comprises a holding device (HE) for a workpiece carrier (T) in a tinting bath container;
wherein the adjustment aid comprises a receptacle into which the first connecting element (VE1) and the second connecting element (VE2) can be inserted, and a second indicator element (S2) is further provided, whereby, in conjunction with a first indicator element (S1) on the glass-holding device, a defined position between the first connecting element (VE1) and the second connecting element (VE2) can be set.

12. The alignment aid (EH) according to claim 11, **characterized in that**
- the alignment aid (EH) provides a defined position (A1, A2) for the at least partially circumferential frame (R); and/or
- the adjustment aid (EH) has a surface area at least as large as that of the at least partially circumferential frame (R) and the first connecting element (VE1), wherein a stop (A1, A2) is formed for the at least partially circumferential frame (R); and/or
- second display element (S2) has a scale.

13. A system comprising a first lens-holding device (G), wherein:
the first lens-holding device is: a lens-holding device for holding a lens glass, in particular an eyeglass lens, by its edge during a tinting process in a tinting bath, comprising a lens-edge holder for holding the lens glass by one of its edges during the coloring process, wherein the lens-edge holder is secured to a first connecting element (VE1), and a second connecting element (VE2) is arranged such that it can be displaced and fixed relative to the first connecting element, which second connecting element comprises a holding device (HE) for a workpiece carrier (T) in a tinting bath container;
wherein the first lens-holding device is a lens-holding device according to one of claims 7 to 10, and/or the system comprises at least one workpiece carrier (T) and at least one second lens-holding device according to one of claims 7 to 10 for simultaneously tinting a first lens glass (L1), in particular an eyeglass lens, which is held by the lens-edge holder of the first lens-holding device, which is secured to the workpiece carrier by its holding means, and a second lens glass (L2; L3), in particular an eyeglass lens, which is held by the lens-edge holder of the second lens-holding device, which is secured to the workpiece carrier by its holding means.

14. The system according to claim 13, **characterized in that** the system further comprises an adjustment aid (EH) according to one of claims 11 to 12 and a calculation means, wherein the calculation means determines, based on a desired tinting gradient, the adjustment position for the first connecting element (VE1) relative to the second connecting element (VE2), which is to be adjusted relative to the second display element (S2) by means of the first display element (S1).

15. The system according to claim 14, **characterized in that** the calculation means determines the adjustment position based on a value that is related to the geometric center.

## Revendications

1. Procédé de coloration graduelle de verres de lentilles, en particulier de verres de lunettes, à l'aide d'une installation de coloration, dans lequel l'installation de coloration présente :
- au moins un récipient de bain de coloration (FB) ;
- au moins un support de produit (T) ;
- au moins un premier dispositif de maintien de verre (G) pour maintenir un premier verre de lentille (L1), en particulier un verre de lunettes, sur le bord de celui-ci pendant une coloration dans le récipient de bain de coloration, dans lequel le premier dispositif de maintien de verre présente un premier organe de maintien de bord de verre pour un maintien du premier verre de lentille sur un bord du premier verre de lentille pendant la coloration, qui est attaché à un premier élément de liaison (VE1), dans lequel un second élément de liaison (VE2), qui présente un premier équipement de maintien (HE) pour le support de produit (T) dans le récipient de bain de coloration, est disposé de manière déplaçable et fixable par rapport à ce premier élément de liaison ; et
- un dispositif de levage (RB) pour le levage et l'abaissement du support de produit attaché au dispositif de levage pour l'immersion et le soulèvement du premier verre de lentille maintenu par le premier organe de maintien de bord de verre du premier dispositif de maintien de verre maintenu sur le support de produit avec le premier équipement de maintien dans le ou hors du récipient de bain de coloration ;
dans lequel le procédé présente les étapes suivantes :
- la disposition (S106) du premier verre de lentille à colorer, en particulier brut et rond, sur le premier dispositif de maintien de verre ;
- le réglage (S108) d'une longueur d'un bras de maintien du premier dispositif de maintien de verre formé par le premier et second élément de liaison ainsi que le premier équipement de maintien et premier organe de maintien de bord de verre par fixation et, le cas échéant, déplacement du premier et second élément de liaison l'un par rapport à l'autre ;
- la mise en œuvre (S130) d'un processus de coloration pour obtenir des verres de lentilles colorés graduellement, en particulier des verres de lunettes, dans lequel le processus de coloration comprend une immersion et un soulèvement du premier verre de lentilles maintenu par le premier organe de maintien de bord de verre du premier dispositif de maintien de verre maintenu sur le support de produit avec le premier équipement de maintien dans le ou hors du récipient de bain de coloration à l'aide du dispositif de levage commandé à cet effet ; et
- le retrait (S144) du premier verre de lentille coloré graduellement du premier dispositif de maintien de verre ; **caractérisé en ce que** la longueur du bras de maintien est réglée au moyen d'une aide au réglage selon l'une quelconque des revendications 11 à 12 et/ou le premier dispositif de maintien de verre est un dispositif de maintien de verre selon l'une quelconque des revendications 7 à 10.

2. Procédé selon la revendication 1, **caractérisé en ce**
- **que** l'installation de coloration présente au moins un second dispositif de maintien de verre pour maintenir un second verre de lentille (L2 ; L3), en particulier un verre de lunettes, sur le bord de celui-ci pendant une coloration dans le récipient de bain de coloration,
dans lequel le second dispositif de maintien de verre présente un second organe de maintien de bord de verre pour un maintien du second verre de lentille sur un bord du second verre de lentille pendant la coloration, qui est attaché à un premier élément de liaison, dans lequel un second élément de liaison, qui présente un second équipement de maintien pour le support de produit dans le récipient de bain de coloration, est disposé de manière déplaçable et fixable par rapport au premier élément de liaison ;
- **que** le dispositif de levage et le support de produit sont conçus pour le levage et l'abaissement du support de produit attaché au dispositif de levage pour l'immersion et le soulèvement simultanés
- du premier verre de lentille maintenu par le premier organe de maintien de bord de verre du premier dispositif de maintien de verre maintenu sur le support de produit avec le premier équipement de maintien et
- du second verre de lentille maintenu par le second organe de maintien de bord de verre du second dispositif de maintien de verre maintenu sur le support de produit avec le second équipement de maintien dans le ou hors du récipient de bain de coloration ; et
- **que** le procédé présente les étapes suivantes :
- la disposition (S106) du second verre de lentille à colorer, en particulier brut et rond, sur le second dispositif de maintien de verre ;
- le réglage (S108) d'une longueur d'un bras de maintien (HA2, HA3) du second dispositif de maintien de verre formé par le premier et second élément de liaison du second dispositif de maintien de verre ainsi que le second équipement de maintien et second organe de maintien de bord de verre par fixation et, le cas échéant, déplacement de ce premier et second élément de liaison l'un par rapport à l'autre ;
- la mise en œuvre (S130) du processus de coloration pour obtenir des verres de lentille, en particulier des verres de lunettes, colorés graduellement, dans lequel le processus de coloration comprend une immersion et un soulèvement simultanés
- du premier verre de lentille maintenu par le premier organe de maintien de bord de verre du premier dispositif de maintien de verre maintenu sur le support de produit avec le premier équipement de maintien et
- du second verre de lentille maintenu par le second organe de maintien de bord de verre du second dispositif de maintien de verre maintenu sur le support de produit avec le second dispositif de maintien de verre dans ou hors du récipient de bain de coloration à l'aide du dispositif de levage commandé à cet effet ; et
- le retrait (S144) du second verre de lentille coloré graduellement du second dispositif de maintien de verre.

3. Procédé selon l'une quelconque des revendications précédentes, **caractérisé en ce qu'**il comprend au moins l'une des étapes suivantes :
- la mise à disposition (S100) du premier et/ou second verre de lentille à colorer en tant que verre de lentille, en particulier verre de lunettes, brut et rond ;
- la lecture (S102) de données de passation de commande de verre de lentille pour le premier et/ou second verre de lentille à colorer, en particulier d'un diamètre du verre de lentille brut et rond, d'un effet optique, d'une forme géométrique, en particulier finale, du verre de lentille une fois le bordage de forme effectué et/ou d'une spécification, en particulier du côté du client, pour un dégradé de coloration ;
- l'établissement (S104) d'un paramètre de dégradé de coloration du premier et/ou second verre de lentille à colorer, en particulier
- la lecture d'une valeur empirique pour le paramètre de dégradé de coloration sur la base des données de passation de commande de verre de lentille lues, en particulier du diamètre du verre de lentille brut et rond ;
- le calcul du paramètre de dégradé de coloration en tant que centre géométrique des dimensions de boîtier ; ou
- le calcul du paramètre de dégradé de coloration à partir des données de passation de commande de verre de lentille transmises ;
- le réglage individuel, spécifique au verre de lentille (S108) de la longueur du bras de maintien du premier et/ou second dispositif de maintien de verre, en particulier sur la base du paramètre de dégradé de coloration établi ;
- le chargement (S110) du support de produit avec le premier et/ou second dispositif de maintien de verre ;
- l'attache (S120) du support de produit, en particulier chargé avec le premier et/ou second dispositif de maintien de verre, au dispositif de levage ;
- la commande du dispositif de levage pour mettre en œuvre le processus de coloration sur la base d'un programme de coloration ;
- le détachement (S140) du support de produit du dispositif de levage une fois la coloration effectuée ; et/ou
- le détachement (S142) du premier et/ou second équipement de maintien de verre du support de produit.

4. Procédé selon l'une quelconque des revendications précédentes, **caractérisé en ce que** le dispositif de levage présente au moins un bras robotisé (RB) et/ou le premier et/ou second dispositif de maintien de verre est un dispositif de maintien de verre selon l'une quelconque des revendications 7 à 10.

5. Installation de coloration pour la coloration graduelle de verres de lentille, en particulier de verres de lunettes, dans laquelle l'installation de coloration est conçue pour la mise en œuvre d'un procédé selon l'une quelconque des revendications précédentes et/ou présente :
- au moins un récipient de bain de coloration (FB) ;
- au moins un support de produit (T) ;
- au moins un premier dispositif de maintien de verre (G) pour maintenir un premier verre de lentille (L1), en particulier un verre de lunettes, sur le bord de celui-ci pendant une coloration dans le récipient de bain de coloration, dans laquelle le premier dispositif de maintien de verre présente un premier organe de maintien de bord de verre pour un maintien du premier verre de lentille sur un bord du premier verre de lentille pendant la coloration, qui est attaché à un premier élément de liaison (VE1), dans laquelle un second élément de liaison (VE2), qui présente un premier équipement de maintien (HE) pour le support de produit (T) dans le récipient de bain de coloration, est disposé de manière déplaçable et fixable par rapport au premier élément de liaison ; et
- un dispositif de levage (RB) pour le levage et l'abaissement du support de produit attaché au dispositif de levage pour l'immersion et le soulèvement du premier verre de lentille maintenu par le premier organe de maintien de bord de verre du premier dispositif de maintien de verre maintenu sur le support de produit avec le premier équipement de maintien dans le ou hors du récipient de bain de coloration ;
dans laquelle le premier dispositif de maintien de verre est un dispositif de maintien de verre selon l'une quelconque des revendications 7 à 10.

6. Installation de coloration selon la revendication 5, **caractérisée en ce qu'**elle présente un système selon l'une quelconque des revendications 13 à 15.

7. Dispositif de maintien de verre (G) pour maintenir un verre de lentille, en particulier un verre de lunettes, sur le bord de celui-ci, pendant une coloration dans un bain de coloration, présentant un organe de maintien de bord de verre pour un maintien du verre de lentille sur un bord du verre de lentille pendant la coloration,
dans lequel l'organe de maintien de bord de verre est attaché à un premier élément de liaison (VE1),
dans lequel un second élément de liaison (VE2), qui présente un équipement de maintien (HE) pour un support de produit (T) dans un récipient de bain de coloration, est disposé de manière déplaçable et fixable par rapport au premier élément de liaison ;
**caractérisé en ce que**
le dispositif de maintien de verre présente un actionneur commandable pour déplacer et/ou fixer le premier et second élément de liaison l'un par rapport à l'autre et/ou un premier élément d'affichage (S1) est mis à disposition pour permettre le réglage du déplacement.

8. Dispositif de maintien de verre (G) selon la revendication 7, **caractérisé en ce que** l'organe de maintien de bord de verre présente
- un premier équipement de maintien de verre (GH1), en particulier élastique, avec un premier élément de maintien de bord de verre, pour un maintien du verre de lentille sur un bord du verre de lentille, sur un premier côté de bord, pendant la coloration ; et/ou
- un deuxième équipement de maintien de verre (GH2), en particulier élastique, avec un second élément de maintien de bord de verre, pour maintenir le verre de lentille sur le bord du verre de lentille, sur un deuxième côté de bord, pendant la coloration ; et/ou
- un cadre (R) au moins partiellement périphérique avec un, en particulier troisième, élément de maintien de bord de verre (GH3), pour maintenir le verre de lentille sur le bord du verre de lentille, sur un côté de bord, en particulier troisième et/ou inférieur, pendant la coloration.

9. Dispositif de maintien de verre (G) selon l'une quelconque des revendications précédentes 7 à 8, **caractérisé en ce que** le premier côté de bord et le deuxième côté de bord sont disposés respectivement sur un côté gauche ou sur un côté droit du bord du verre de lentille et/ou le troisième côté de bord est disposé sur un côté inférieur du bord du verre de lentille et/ou le premier élément de liaison (VE1) et le second élément de liaison (VE2) peuvent être fixés au moyen d'une liaison vissée (F).

10. Dispositif de maintien de verre (G) selon l'une quelconque des revendications précédentes 7 à 9, **caractérisé en ce que** la déplaçabilité est limitée par une piste forcée qui est mise à disposition dans le premier élément de liaison (VE1) et/ou le second élément de liaison (VE2).

11. Aide au réglage (EH) pour un dispositif de maintien de verre (G), en particulier selon l'une quelconque des revendications précédentes 7 à 10,
dans laquelle le dispositif de maintien de verre est : un dispositif de maintien de verre pour maintenir un verre de lentille, en particulier un verre de lunettes, sur le bord de celui-ci, pendant une coloration dans un bain de coloration, présentant un organe de maintien de bord de verre pour un maintien du verre de lentille sur un bord du verre de lentille pendant la coloration, dans laquelle l'organe de maintien de bord de verre est attaché à un premier élément de liaison (VE1),
dans laquelle un second élément de liaison (VE2), qui présente un équipement de maintien (HE) pour un support de produit (T) dans un récipient de bain de coloration, est disposé de manière déplaçable et fixable par rapport au premier élément de liaison ;
dans laquelle l'aide au réglage présente un logement dans lequel le premier élément de liaison (VE1) et le second élément de liaison (VE2) peuvent être insérés, dans laquelle un second élément d'affichage (S2) est en outre mis à disposition, dans laquelle une position définie du premier élément de liaison (VE1) au second élément de liaison (VE2) peut être réglée en interaction avec un premier élément d'affichage (S1) sur le dispositif de maintien de verre.

12. Aide au réglage (EH) selon la revendication 11, **caractérisée en ce**
- **qu'**une position définie (A1, A2) est mise à disposition sur l'aide au réglage (EH) pour le cadre (R) au moins partiellement périphérique ; et/ou
- **que** l'aide au réglage (EH) présente une surface d'au moins la taille du cadre (R) au moins partiellement périphérique et du premier élément de liaison (VE1), dans laquelle une butée (A1, A2) est formée pour le cadre (R) au moins partiellement périphérique ; et/ou
- **que** le second élément d'affichage (S2) présente une échelle.

13. Système, qui présente un premier dispositif de maintien de verre (G), dans lequel :
le premier équipement de maintien de verre est : un dispositif de maintien de verre pour maintenir un verre de lentille, en particulier un verre de lunettes, sur le bord de celui-ci, pendant une coloration dans un bain de coloration, présentant un organe de maintien de bord de verre pour un maintien du verre de lentille sur un bord du verre de lentille pendant la coloration, dans lequel l'organe de maintien de bord de verre est attaché à un premier élément de liaison (VE1), dans lequel un second élément de liaison (VE2), qui présente un équipement de maintien (HE) pour un support de produit (T) dans un récipient de bain de coloration, est disposé de manière déplaçable et fixable par rapport au premier élément de liaison ;
dans lequel le premier dispositif de maintien de verre est un dispositif de maintien de verre selon l'une quelconque des revendications 7 à 10 et/ou le système présente au moins un support de produit (T) et au moins un second dispositif de maintien de verre selon l'une quelconque des revendications 7 à 10 pour la coloration simultanée d'un premier verre de lentille (L1), en particulier d'un verre de lunettes, qui est maintenu par l'organe de maintien de bord de verre du premier
dispositif de maintien de verre, qui est maintenu sur le support de produit avec son équipement de maintien, et d'un second verre de lentille (L2 ; L3), en particulier d'un verre de lunettes, qui est maintenu par l'organe de maintien de bord de verre du second dispositif de maintien de verre, qui est maintenu sur le support de produit avec son équipement de maintien.

14. Système selon la revendication 13, **caractérisé en ce que** le système présente en outre une aide au réglage (EH) selon l'une quelconque des revendications 11 à 12 et un moyen de calcul, dans lequel le moyen de calcul détermine sur la base d'un dégradé de couleur souhaité la position de réglage pour le premier élément de liaison (VE1) par rapport au second élément de liaison (VE2) qui vise à être réglé au moyen du premier élément d'affichage (S1) par rapport au second élément d'affichage (S2).

15. Système selon la revendication 14, **caractérisé en ce que** le moyen de calcul établit la position de réglage sur la base d'une valeur qui est rapportée au centre géométrique.
